(19) 

Europäisches
Patentamt
European
Patent Office
Office européen
des brevets

(11) **EP 4 513 945 A1**

(12) **EUROPEAN PATENT APPLICATION**
published in accordance with Art. 153(4) EPC

(43) Date of publication:
**26.02.2025 Bulletin 2025/09**

(21) Application number: **23791160.7**

(22) Date of filing: **17.04.2023**

(51) International Patent Classification (IPC):
**H04W 24/02** (2009.01)

(52) Cooperative Patent Classification (CPC):
**H04L 5/00; H04W 24/02; H04W 24/10**

(86) International application number:
**PCT/CN2023/088571**

(87) International publication number:
**WO 2023/202505 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022 CN 202210419340**

(71) Applicant: **Vivo Mobile Communication Co., Ltd.
Dongguan, Guangdong 523863 (CN)**

(72) Inventors:
• **WANG, Chenxi
Dongguan, Guangdong 523863 (CN)**
• **SUN, Peng
Dongguan, Guangdong 523863 (CN)**

(74) Representative: **Cabinet Beaumont
4, Place Robert Schuman
B.P. 1529
38025 Grenoble Cedex 1 (FR)**

(54) **CHANNEL STATE INFORMATION MEASURING AND REPORTING METHOD, AND TERMINAL AND NETWORK-SIDE DEVICE**

(57)     This application discloses a channel state information measurement and reporting method, a terminal, and a network side device, and belongs to the technical field of communications. The channel state information measurement and reporting method of the embodiments of this application includes: A terminal receives a target signaling sent by a network side device, and determines a reference signal (RS) resource of a first object based on the target signaling. The target signaling is a signaling obtained before the terminal accesses the first object. The terminal executes CSI measurement and reporting based on the RS resource of the first object.

A terminal receives a target signaling sent by a network side device, and determines a reference signal (RS) resource of a first object based on the target signaling, where the target signaling is a signaling obtained before the terminal accesses the first object — 301

The terminal executes CSI measurement and reporting based on the RS resource of the first object — 302

**FIG. 3**

Processed by Luminess, 75001 PARIS (FR)

**Description**

**CROSS-REFERENCE TO RELATED APPLICATIONS**

This application claims priority to Chinese Patent Application No. 202210419340.2, entitled "CHANNEL STATE INFORMATION MEASUREMENT AND REPORTING METHOD, TERMINAL, AND NETWORK SIDE DEVICE" filed on April 20, 2022, which is incorporated by reference in its entirety.

**TECHNICAL FIELD**

This application belongs to the technical field of communications, and in particular, to a channel state information measurement and reporting method, a terminal, and a network side device.

**BACKGROUND**

In a cell switching scenario in the related art, after receiving a higher-layer switching signaling carrying a common configuration, a terminal executes rough synchronization and automatic gain control (Automatic Gain Control, AGC) adjustment by detecting a synchronization signal block (Synchronization Signal Block, SSB) of a target cell, and then sends random access channel (Random Access Channel, RACH) information to the target cell for uplink synchronization and accessing to the cell. After successfully accessing the target cell, the terminal receives dedicated configuration information, such as physical resources such as a channel state information reference signal (Channel State Information Reference Signal, CSI-RS), a tracking reference signal (Tracking Reference Signal, TRS), and a channel, of the target cell sent by a network side, and executes fine time-frequency synchronization and AGC adjustment by detecting the TRS. Then, by measuring the CSI-RS and reporting channel state information (CSI) to the network side, the network side executes downlink scheduling transmission according to the CSI information reported by the terminal side. In this case, a downlink of the target cell takes effect.

Since the downlink scheduling transmission of the target cell can only occur after CSI measurement and reporting, the terminal can obtain resource configuration information of the CSI-RS of the target cell only after successfully switching to the target cell. However, the terminal cannot execute downlink scheduling transmission before the CSI measurement and reporting are completed. As a result, the interruption time of the downlink greatly increases.

**SUMMARY**

Embodiments of this application provide a channel state information measurement and reporting method, a terminal, and a network side device, which can solve a problem of how to quickly obtain a CSI report of a target cell to enable a terminal to execute downlink transmission and reception as soon as possible after completing cell switching, to reduce the interruption time of downlink.

In a first aspect, a channel state information (CSI) measurement and reporting method is provided, which is applied to a terminal. The method includes:

The terminal receives a target signaling sent by a network side device, and determines a reference signal (RS) resource of a first object based on the target signaling. The target signaling is a signaling obtained before the terminal accesses the first object.

The terminal executes CSI measurement and reporting based on the RS resource of the first object.

In a second aspect, a channel state information (CSI) measurement and reporting method is provided, which is applied to a network side device. The method includes:

The network side device sends a target signaling to a terminal. The target signaling is a signaling sent before the terminal accesses a first object.

The network side device receives a CSI report reported by the terminal. The CSI report is obtained by measurement executed by the terminal based on an RS resource of the first object, and the RS resource of the first object is determined by the terminal based on the target signaling.

In a third aspect, a channel state information (CSI) measurement and reporting apparatus is provided, including:

a receiving module, configured to: receive a target signaling sent by a network side device, and determine a reference signal (RS) resource of a first object based on the target signaling, where the target signaling is a signaling obtained before the terminal accesses the first object; and

a measurement and reporting module, configured to execute CSI measurement and reporting based on the RS resource of the first object.

In a fourth aspect, a channel state information (CSI) measurement and reporting apparatus is provided, including:

a sending module, configured to send a target signaling to a terminal, where the target signaling is a signaling sent before the terminal accesses a first object; and

a receiving module, configured to receive a CSI report reported by the terminal, where the CSI report is obtained by measurement executed by the terminal based on an RS resource of the first object, and the RS resource of the first object is determined by the terminal based on the target signaling.

In a fifth aspect, a terminal is provided. The terminal includes a processor and a memory. The memory stores a program or an instruction runnable on the processor, and the program or instruction, when run by the processor, implements the steps of the method as described in the first aspect.

In a sixth aspect, a network side device is provided. The network side device includes a processor and a memory. The memory stores a program or an instruction runnable on the processor, and the program or instruction, when run by the processor, implements the steps of the method as described in the second aspect.

In a seventh aspect, a communication system is provided, including: a terminal and a network side device. The terminal may be configured to execute the steps of the channel state information (CSI) measurement and reporting method as described in the first aspect, and the network side device may be configured to execute the steps of the channel state information (CSI) measurement and reporting method as described in the second aspect.

In an eighth aspect, a readable storage medium is provided, having a program or an instruction stored thereon. The program or instruction, when run by a processor, implements the steps of the method as described in the first aspect, or implement the steps of the method as described in the second aspect.

In a ninth aspect, a chip is provided. The chip includes a processor and a communication interface. The communication interface is coupled with the processor, and the processor is configured to run a program or an instruction to implement the method as described in the first aspect, or implement the method as described in the second aspect.

In a tenth aspect, a computer program/program product is provided. The computer program/program product is stored in a storage medium. The computer program/program product is run by at least one processor to implement the steps of the method as described in the first aspect or the steps of the method as described in the second aspect.

In the embodiments of this application, the terminal may acquire the target signaling before accessing the first object, determine the reference signal (RS) resource of the first object based on the target signaling, and execute the CSI measurement and reporting based on the RS resource of the first object, so that obtaining time of the target signaling is advanced from "after the terminal accesses the first object" to "before the terminal accesses the first object", and a CSI result of the first object can be quickly reported. Therefore, the terminal can execute downlink transmission and reception as soon as possible after completing cell switching, thereby reducing the interruption time of downlink.

## BRIEF DESCRIPTION OF THE DRAWINGS

FIG. 1 is a block diagram of a wireless communication system applicable to an embodiment of this application;

FIG. 2 is a schematic diagram of triggering timing of an aperiodic CSI report in a case of d=0 in the related art;

FIG. 3 is a flowchart I of a channel state information measurement and reporting method according to an embodiment of this application;

FIG. 4 is a schematic diagram I of an interaction flow of a channel state information measurement and reporting method according to an embodiment of this application;

FIG. 5 is a flowchart II of a channel state information measurement and reporting method according to an embodiment of this application;

FIG. 6 is a schematic structural diagram I of a channel state information measurement and reporting apparatus according to an embodiment of this application;

FIG. 7 is a schematic structural diagram II of a channel state information measurement and reporting apparatus according to an embodiment of this application;

FIG. 8 is a schematic structural diagram of a communication device according to an embodiment of this application;

FIG. 9 is a schematic structural diagram of hardware of a terminal according to an embodiment of the present disclosure; and

FIG. 10 is a schematic structural diagram of a network side device according to an embodiment of this application.

## DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

This specification and claims of this application, and terms "first" and "second" are used to distinguish similar objects, but are unnecessarily used to describe a specific sequence or order. It should be understood that terms used like this are interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

It is worth noting that the technology described in the embodiments of this application is not limited to a long term evolution (Long Term Evolution, LTE)/LTE Evolution (LTE-Advanced, LTE-A) system, and can alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology can be applied to both the aforementioned systems and radio technologies, as well as other systems and radio technologies. The following describes a new radio (New Radio, NR) system for the example purpose and uses the term NR in most of the following descriptions. However, these technologies can alternatively be applied to applications other than the NR system application, such as a 6th generation (6th Generation, 6G) communication system.

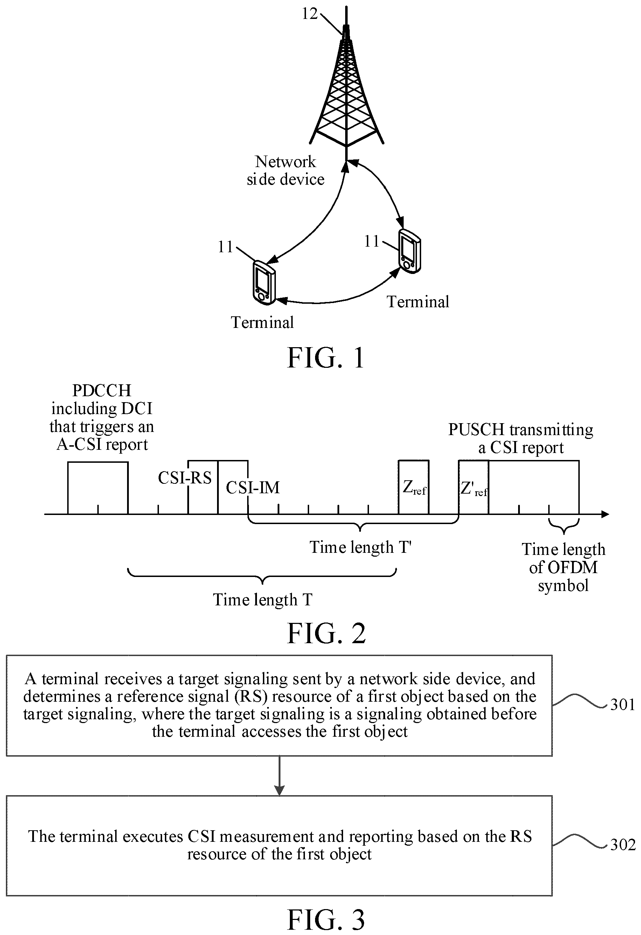

FIG. 1 shows a block diagram of a wireless communication system applicable to an embodiment of this application. The wireless communication system includes a terminal 11 and a network side device 12. The terminal 11 can be a mobile phone, a tablet personal computer (Tablet Personal Computer), a laptop computer (Laptop Computer) or alternatively referred to as a laptop, a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart jewelry (a smart bracelet, a smart ring, a smart necklace, a smart bangle, a smart anklet, and the like), a smart wristband, smart clothing, and the like. It should be noted that, in the embodiments of this application, a specific type of the terminal 11 is not limited. The network side device 12 may include an access network device or a core network device. The access network device 12 may alternatively be referred to as a radio access network device, a Radio Access Network (Radio Access Network, RAN), a radio access network function, or a radio access network unit. The radio access network device 12 can include a base station, a WLAN access point, a WiFi node, or the like. The base station can be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted that, in the embodiments of this application, only the base station in the NR system is taken as an example, but a specific type of the base station is not limited.

First, a Rel-16 CSI principle is introduced:

A CSI report may be configured as follows:

1. Periodic CSI report (P-CSI): It is only transmitted on a physical uplink control channel (Physical Uplink Control Channel, PUCCH);

2. Semi-persistent CSI report (SP-CSI): It is transmitted on a PUCCH or a physical downlink shared channel (Physical Downlink Shared Channel, PUSCH). PUSCH-based SP-CSI reporting is activated and deactivated by a CSI request (CSI Request) in a downlink control information (Downlink Control Information, DCI) signaling. A maximum of 64 trigger states are configured for radio resource control (Radio Resource Control, RRC). Each trigger state corresponds to one CSI reporting setting (CSI Report Setting). During CSI obtaining, a resource setting(Resource Setting) associated with each CSI Report Setting includes only one CSI-RS resource set;

3. Aperiodic CSI report (A-CSI): It is only transmitted on the PUSCH. PUSCH-based A-CSI reporting is activated by a DCI signaling. An RRC configures a plurality of trigger states (Trigger State), and each trigger state corresponds to one or more CSI report settings (CSI Report Setting). A CSI request (CSI Request) in DCI triggers one Trigger State. The CSI request in a DCI format 0_1 is configured as a maximum of 6 bits. Therefore, a maximum of 64 CSI trigger states are supported. When the number of CSI trigger states configured by the RRC is greater than 64, an MAC CE signaling is used to map the 64 trigger states to the CSI request. Each CSI trigger state may be associated with one to three resource settings. If the resource settings include a plurality of resource sets, only one of the resource sets will be selected, and quasi co-location (Quasi co-location, QCL) information of a CSI-RS resource in the resource set is each resource setting according to a transmission configuration indicator (Transmission Configuration Indicator, TCI) state.

A CSI resource setting is as follows:

1. $M \geq 1$ resource setting (resource setting);
2. One resource setting includes $S \geq 1$ CSI-RS resource sets;
3. One resource set includes $Ks \geq 1$ RS resources (resource), for example, CSI-RS/CSI interference measurement (CSI Interference Measurement, CSI-IM) resources; and
4. One CSI-RS resource is used for configuring a port numbery of a CSI-RS, information of a time-frequency position, and the like. One CSI-IM resource is used for configuring information of a time-frequency position of a CSI-IM, and the like.

Next, Rel-16 CSI measurement resources are introduced:
The measurement resources are as follows:

1. CSI-IM-based interference measurement; and
2. Non-zero power CSI-RS (Non-Zero Power CSI-RS, NZP CSI-RS)-based interference measurement and channel measurement.

Cycle and slot offset (slot offset):

1. For a periodic and semi-persistent CSI-RS, its cycle and the slot offset are configured by an RRC signaling;
2. A semi-persistent NZP CSI-RS/CSI-IM is activated and deactivated using an MAC CE; and
3. An aperiodic CSI-RS is triggered by DCI, and candidate values of the slot offset of the CSI-RS are independently configured by the RRC signaling in each resource set (Resource Set) in a measurement resource setting (Resource Setting), and one of the candidate values is indicated by a DCI signaling as a CSI-RS sending moment.

SP-CSI reporting:

A periodic or semi-persistent CSI-RS may be used for channel measurement, and correspondingly, a periodic or semi-persistent CSI-IM may be used for interference measurement. Use of a NZP CSI-RS for interference measurement is not supported.

A-CSI reporting:

A periodic, semi-persistent, or aperiodic CSI-RS may be used for channel measurement, and correspondingly, the periodic, semi-persistent, or aperiodic CSI-IM is used for interference measurement. Use of a NZP CSI-RS for interference measurement is supported.
Then, content of a CSI report is introduced:
A terminal may use a CSI-ReportConfig (CSI report configuration) to set a higher-layer parameter reportQuantity (report quantity) to 'none', 'cri- ri-pmi- cqi ', 'cri-RI-i1', 'cri-RI-CQI', 'cri-RSRP', 'cri-SINR', 'ssb-Index-RSRP', 'ssb-Index-SINR', or 'cri-RI-LI-PMI-CQI'.
If the terminal is configured with the CSI-ReportConfig, and an high-layer parameter reportQuantity is set to "none", the terminal will not report content for the CSI-ReportConfig.
If the terminal is configured with the CSI-ReportConfig, and the high-layer parameter reportQuantity is set to 'cri-RI-PMI-CQI' or 'cri-RI-LI-PMI-CQI', the terminal will report a precoding matrix for an entire report band, or report a precoding matrix for each subband.
If the terminal is configured with the CSI-ReportConfig, and the high-layer parameter reportQuantity is set to 'cri-RI-i1-CQI', the terminal will report a PMI, including a single wideband indication for an entire CSI report band.
Then, a CSI processing criterion is introduced:

The capability of a terminal for processing a CSI report, namely, for simultaneously calculating a quantity $N_{CPU}$ of CSI needs to be reported to a network. If a terminal supports $N_{CPU}$ simultaneous calculations of CSI, it means that the terminal has $N_{CPU}$ CSI processing units to process CSI reports of all configured cells.

The quantity of available CPU: In an orthogonal frequency division multiplex (Orthogonal frequency division multiplex, OFDM) symbol, if L CPUs have been used to process CSI reports, a UE still has $N_{CPU} - L$ available CPUs. There are $N$ CSI reports in the OFDM symbol starting to use the CPUs; an $n = 0, ..., N - 1$th CSI report needs to use $O_{CPU}^{(n)}$ CPUs; and it is possible that the quantity of available CPU is less than the quantity of CPUs needing to be used by the $N$ CSI reports. Then, the UE does not need to update $N - M$ CSI reports with low priorities, where $0 \leq M \leq N$ is a maximum value satisfying $\sum_{n=0}^{M-1} O_{CPU}^{(n)} \leq N_{CPU} - L$.

The quantity of the CPUs used by the CSI reports is shown in Table 1:

Table 1

| Report quantity *reportQuantity* | Other (Others) | $O_{CPU}$ |
|---|---|---|
| None (None) (trs-Info configured, trs-Info configured) | | 0 |
| CSI reference signal resource indicator-reference signal received power cri-RSRP<br>SSB beam identifier-reference signal received power ssb-Index-RSRP<br>CSI reference signal resource indicator-signal to noise ratio cri-SINR<br>SSB beam identifier-signal to noise ratio ssb-Index-SINR<br>None (trs-Info not configured, trs-Info not configured) | | 1 |
| CSI reference signal resource indicator-rank indication-precoding matrix indication-channel quality indication cri-RI-PMI-CQI<br>CSI reference signal resource indicator-rank indication-wideband indication cri-RI-i1<br>CSI reference signal resource indicator-rank indication-wideband indication-channel quality indication cri-RI-i1-CQI<br>CSI reference signal resource indicator-rank indication-channel quality indication cri-RI-CQI | Aperiodic CSI report A-CSI, no uplink shared channel UL-SCH or hybrid automatic repeat request response HARQ-ACK, L = 0 (no CPU usage), single wideband CSIsingle WB CSI, CSI-RS port < = 4, no CSI-RS resource indicates CRI, and Type-I codebook or cri-RI-CQI | $N_{CPU}$ |
| CSI reference signal resource indicator-rank indication-c-layer indication-precoding matrix indication-channel quality indication ri-RI-LI-PMI-CQI | Otherwise (otherwise) | $K_s$ |

In foregoing Table 1, $K_s$ is the quantity of CSI-RS resource (CSI-RS resource) included in a CSI-RS resource set (CSI-RS resource set) for channel measurement.

CPU usage time: A summary of start and end OFDM symbols that a CSI report uses CPUs is shown in Table 2 below:

Table 2

| | Start symbol | Termination symbol |
|---|---|---|
| P/SP CSI (except case 1) and *reportQuantity* not none | The earliest symbol in the various CSI-RS/CSI-IM/SSB resources transmitted by the CSI-RS/CSI-IM/SSB for the latest channel or interference measurement before the corresponding CSI reference resource | The last symbol of the PUSCH/PUCCH transmitting CSI |
| A-CSI and case 1, and *reportQuantity* is not none | The first symbol after a PDCCH triggering a CSI report | Last symbol of a PUSCH transmitting CSI |

(continued)

| | Start symbol | Termination symbol |
|---|---|---|
| SP-CSI (except case 1), *reportQuantity* none, and *trsInfor* not configured | The earliest symbol transmitted by the P/SP CSI-RS/SSB resource for channel measurement, which is latest used for L1-RSRP calculation | symbols after the last symbol transmitted by the CSI-RS/SSB resource for channel measurement, which is latest used for L1-RSRP calculation |
| AP-CSI, *reportQuantity* none, and *trsInfor* not configured | The first symbol after a PDCCH triggering a CSI report | The last symbol between $Z_3$ symbols after the first symbol after the PDCCH and $Z_3'$ symbols after the last symbol transmitted by the CSI-RS/SSB resources for channel measurement, which is latest used for L1-RSRP calculation |

In Table 2, case 1 means first transmission of a PUSCH-based SP-CSI report activated by a PDCCH.

Then, CSI calculation time is introduced:

When a CSI request field (CSI request field) in DCI triggers one or more CSI reports transmitted by a PUSCH, a terminal may provide a valid CSI report if the following two conditions are satisfied:

After a timing advance is considered, the first uplink OFDM symbol (hereinafter referred to as "symbol") moment at which the CSI report is transmitted is not earlier than symbol $Z_{ref}$ and $Z'_{ref}$, where:

$Z_{ref}$ is defined as a next uplink symbol including a control plane (Control Plane, CP) after time (second) $((Z+d)$ $(2048+144)\cdot\kappa\cdot2^{-\mu})\cdot T_C$ after the last symbol of the PDCCH triggering a CSI report;

$Z'_{ref}$ is defined as follows: if a triggered CSI report n is based on an aperiodic CSI-RS, (1) a last symbol of an aperiodic CSI-RS for channel measurement; (2) a last symbol of an aperiodic CSI-IM for interference measurement; and (3) a last symbol of an aperiodic NZP CSI-RS for interference measurement, a next uplink symbol including a CP after time (second) $((Z'+d)\cdot(2048+144)\cdot\kappa\cdot2^{-\mu})\cdot T_C$ after the three last symbols,

where a value of d is related to whether the CSI report is multiplexed with the PUSCHs including a transmission data block or an HARQ-ACK or both the transmission data block or the HARQ-ACK, and to numerology $\mu$.

As shown in FIG. 2, a schematic diagram of triggering timing of an aperiodic CSI report in a case of d=0 is shown.

If the first uplink symbol of a PUSCH used by a CSI request field (CSI request field) in DCI to trigger one or more CSI reports transmitted by the PUSCH does not satisfy the foregoing conditions, a terminal may ignore the DCI, not update CSI, or discard the CSI reports according to a specific situation.

If the quantity of CSI processing unit (CPU) currently idle on the terminal can calculate M CSI reports, $Z = \max_{m=0,...,M-1}(Z_m)$, $Z' = \max_{m=0,...,M-1}(Z'_m)$. $(Z_m, Z'_m)$ corresponds to a value of an $m^{th}$ CSI report. Based on the complexity of CSI calculation and the quantity of unused CPU, the agreement shows $(Z,Z')$ respectively corresponding to two types of CSI calculation time, namely, low delay CSI (delay requirement 1) and high delay CSI (delay requirement 2), which are listed in Table 3 and Table 4 respectively.

Table 3: Low delay CSI (delay requirement 1)

| $\mu$ | $Z_1$ [symbol] | |
|---|---|---|
| | $Z_{(1)}$ | $Z'_{(1)}$ |
| 0 | [9 or 10] | [7 or 8] |
| 1 | 13 | 11 |
| 2 | 25 | 21 |
| 3 | 43 | 36 |

Table 4: High delay CSI (delay requirement 2)

| $\mu$ | $Z_1$ [symbol] | | $Z_2$ [symbol] | | $Z_3$ [symbol] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2+KB_1)$ | $X_2$ |
| 3 | 97 | 85 | 152 | 140 | $\min(97, X_3+KB_2)$ | $X_3$ |

If the first uplink symbol of a PUSCH used by a CSI request field (CSI request field) in DCI to trigger one or more CSI reports transmitted by the PUSCH does not satisfy the foregoing conditions, a UE may ignore the DCI, not update CSI, or discard the CSI reports according to a specific situation.

$\mu=\min(\mu_{PDCCH}, \mu_{CSI\text{-}RS}, \mu_{UL})$ in Table 3 or Table 4, where: $\mu_{PDCCH}$ corresponds to a subcarrier spacing of a PDCCH transmitting DCI triggering a CSI report; $\mu_{UL}$ corresponds to a subcarrier spacing of a PUSCH transmitting a CSI report; and $\mu_{CSI\text{-}RS}$ corresponds to a minimum subcarrier spacing of an aperiodic CSI-RS triggered by DCI.

Table 5 Supported transmission value setting

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

If a terminal does not expect to receive more than one aperiodic CSI report request in one slot, it means that regardless of a CA scenario or a non-CA scenario, the terminal will not transmit, on one slot, aperiodic CSI reports triggered by CSI report requests of a plurality of pieces of DCI.

In the foregoing formula, time unit $T_c = 1/(\Delta f_{max} \cdot N_f)$ seconds (s), $\Delta f_{max} = 480 \cdot 10^3$ Hertz (Hz), and $N_f = 4096$. Constant $\kappa = 64$.

Then, a CSI reference resource is introduced:

Definition of a CSI reference resource (CSI reference resource) of a serving cell:

1. In the frequency domain, the CSI reference resource is defined as a downlink physical resource block in a group of bandwidths for obtaining CSI;

2. In the time domain, for an uplink CSI reporting slot $n'$, the CSI reference resource is a downlink slot $n\text{-}n_{CSI\_ref}$, where

$$n = \left\lfloor n' \cdot \frac{2^{uDL}}{2^{uUL}} \right\rfloor$$

, $u_{DL}$ and $u_{UL}$ represent subcarrier spacing settings of uplink and downlink respectively.

For periodic and semi-persistent CSI reporting,

1. if there is only one CMR or SSB resource, $n_{CSI\_ref}$ is a minimum value greater than or equal to $4 \cdot 2^{\mu DL}$, and corresponds to a valid downlink slot; and

2. if there are a plurality of CMR or SSB resources, $n_{CSI\_ref}$ is a minimum value greater than or equal to $5 \cdot 2^{\mu DL}$ and corresponds to a valid downlink slot.

For aperiodic CSI reporting, if DCI indicates that a slot that a user reports CSI and a slot of a CSI request are the same, $n_{CSI\_ref}$ enables a reference resource defined in a valid downlink slot to be the same as the corresponding CSI request, otherwise, $n_{CSI\_ref}$ is a minimum value greater than or equal to $\left\lfloor Z' / N_{symb}^{slot} \right\rfloor$ and corresponds to a valid downlink slot, where $Z'$ corresponds to a delay requirement.

When a periodic or semi-persistent CSI-RS/CSI-IM or SSB resource is used for channel or interference measurement, a distance from a last OFDM symbol of a resource for channel or interference measurement that a UE does not expect to receive to the first OFDM symbol of an aperiodic CSI report is less than $Z'$ symbol.

Finally, the priority of a CSI reporting is introduced:

A CSI report corresponds to a priority parameter:

$$\mathrm{Pri}_{iCSI}(y, k, c, s) = 2 \cdot N_{cells} \cdot M_s \cdot y + N_{cells} \cdot M_s \cdot k + M_s \cdot c + s$$

$\mathrm{Pri}_{iCSI}(y, k, c, s) = 2 \cdot N_{cells} \cdot M_s \cdot y + N_{cells} \cdot M_s \cdot k + M_s \cdot c + s$

where y = 0 represents aperiodic CSI reporting to be executed on a PUSCH; y = 1 represents semi-persistent CSI reporting to be executed on the PUSCH; y = 2 represents semi-persistent CSI reporting to be executed on a PUCCH; y = 3 represents regular CSI reporting to be executed on the PUCCH;

k = 0 represents a CSI report that carries L1 reference signal received power or an L1 signal to noise ratio; k = 1 represents a CSI report that does not carry L1 reference signal received power or an L1 signal to noise ratio;

*c* represents a serving cell index; $N_{cells}$ represents a value of a higher-layer parameter *maxNrofServingCells*;

s represents a report configuration identifier reportConfigID; and $M_s$ identifies a value of a higher-layer parameter *maxNrofCSI-ReportConfigurations*.

A smaller priority parameter value $\mathrm{Pri}_{iCSI}(y, k, c, s)$ indicates that the priority of the corresponding CSI report is larger.

A channel state measurement and reporting method provided by the embodiments of this application will be described in detail below through some embodiments and their application scenarios in combination with the accompanying drawings.

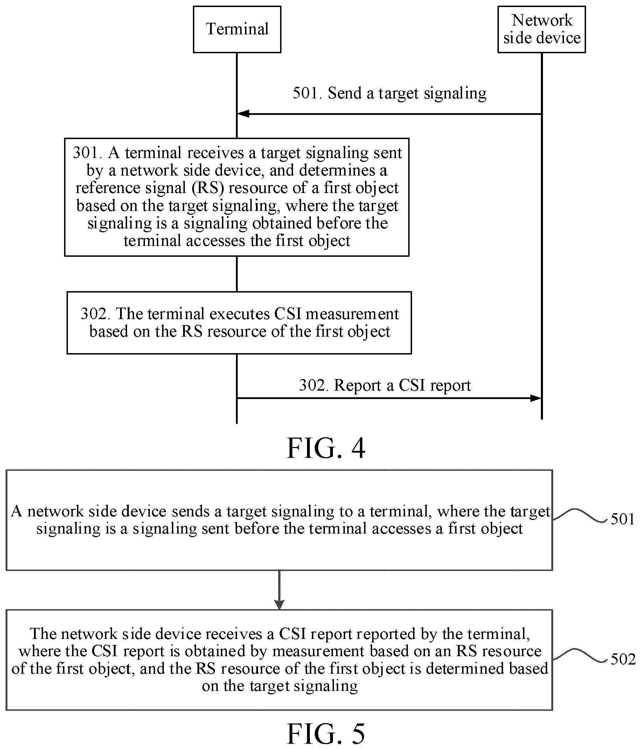

FIG. 3 is a flowchart I of a channel state information measurement and reporting method according to an embodiment of this application. As shown in FIG. 3 and FIG. 4, the method provided in this embodiment includes:

Step 301. A terminal receives a target signaling sent by a network side device, and determines a reference signal (RS) resource of a first object based on the target signaling. The target signaling is a signaling obtained before the terminal accesses the first object.

Specifically, the first object may be a target transmission reception point (TRP), a target cell, or a target cell group. The target signaling is a signaling obtained before the terminal accesses the first object. Namely, obtaining time of the target signaling is advanced from "after the terminal accesses the first object" to "before the terminal accesses the first object", which can quickly obtain the target signaling, and the RS resource of the first object is further quickly obtained.

Step 302. The terminal executes CSI measurement and reporting based on the RS resource of the first object.

Specifically, after obtaining the RS resource of the first object, the terminal executes the CSI measurement and reporting based on the RS resource of the first object, to obtain a CSI report.

According to the method of this application, the terminal may acquire the target signaling before accessing the first object, determine the reference signal (RS) resource of the first object based on the target signaling, and execute the CSI measurement and reporting based on the RS resource of the first object, so that the obtaining time of the target signaling is advanced from "after the terminal accesses the first object" to "before the terminal accesses the first object", and the CSI report of the first object can be quickly reported. Therefore, the terminal can execute downlink transmission and reception as soon as possible after completing cell switching, thereby reducing the interruption time of downlink.

In step 301, an implementation used by the terminal determines the reference signal (RS) resource of the first object based on the target signaling may include the following several modes:

Mode I:

The target signaling includes a first signaling; the first signaling is used for indicating configuration information of a plurality of objects; the plurality of objects include the first object, or the first object and a current service object; and the first object is different from the current service object.

Specifically, the plurality of objects included in the first signaling include the first object, or the first object and the current service object. The current service object is a current serving TRP, a current serving cell, or a current serving cell group; and the first object is a target TRP, a target cell, or a target cell group that is different from the current service object, among the plurality of objects included in the first signaling.

Optionally, the configuration information of the plurality of objects includes higher-layer configuration information and/or physical layer configuration information. The higher-layer configuration information includes at least one of the following: cell group configuration information, special cell configuration information, synchronization rearrangement information, serving cell common configuration information, and serving cell configuration information. The physical layer configuration information includes at least one of the following: configuration information of the RS resource, configuration information of CSI reporting, frequency domain information, subcarrier spacing (SCS) information, cell radio network temporary identifier (Cell RNTI, RNTI) information, physical uplink control channel (PUCCH) information, configuration permission information, pass loss reference signal (Path Loss RS, PL-RS) information, random access channel (Random Access Channel, RACH) resource information, quasi co-location (QCL) information, and spatial relationship information. The configuration information of the CSI reporting in the configuration information of the current service object is associated with the RS resource of the first object. The frequency domain information includes at least one of the following: synchronization signal block (Synchronization Signal Block, SSB) frequency point information, CSI-RS frequency point information, and band indication information.

Optionally, in step 301, the terminal determines a reference signal (RS) resource of a first object based on the target signaling, which includes:

The terminal determines the first object based on the plurality of objects included in the first signaling; and the terminal determines the RS resource of the first object based on the configuration information of the plurality of objects included in the first signaling.

Specifically, the terminal uses all or some of the objects other than the current service object among the plurality of objects included in the first signaling as the first objects. For each first object, the terminal determines the RS resource of the first object based on the configuration information of the RS resource of the first object included in the first signaling, namely, the terminal may determine the RS resource of at least one first object based on the first signaling.

In a specific embodiment, after the terminal receives RRC preconfiguration information carrying N (N≥1) candidate objects, each candidate object is the first object, and CSI-RSs for CSI and TRSs of all the first objects take effect immediately. The terminal may obtain accurate time-frequency synchronization information of each first object through the TRS of the first object, may obtain a CSI report through the CSI-RS of each first object, and report the CSI report to the current service object or the first object.

Optionally, the method of this embodiment further includes: The terminal determines, according to a first preset rule, start time and end time between which the RS resource of the first object is effective. The first preset rule includes: the RS resource of the first object taking effect after the terminal receives the first signaling, and losing effect after the terminal receives a signaling for releasing an RS resource configuration of the first object.

Specifically, in a case that the RS resource is a periodic RS resource, the start time for the RS resource of the first object to be effective is not earlier than time at which the terminal receives a radio resource control signaling (i.e. the first signaling) including the configuration information of the RS resource, and the end time for the RS resource of the first object to be effective is not later than time at which the terminal receives a radio resource control signaling for releasing the configuration information of the RS resource.

In a case that the RS resource is a semi-persistent RS resource, the start time for the RS resource of the first object to be effective is the first symbol at which an MAC CE for activating the semi-persistent RS resource takes effect. The MAC CE for activating the semi-persistent RS resource is after the first signaling. The end time for the RS resource of the first object to be effective is the first symbol at which an MAC CE for deactivating the semi-persistent RS resource takes effect. The MAC CE for deactivating the semi-persistent RS resource is after the first signaling.

In a case that the RS resource is an aperiodic RS resource, the start time for the RS resource of the first object to be effective is a last symbol of a physical downlink control channel (PDCCH) for activating the aperiodic RS resource. The PDCCH is after the first signaling. The end time for the RS resource of the first object to be effective is a last symbol of a physical uplink shared channel (PUSCH) triggered by a PDCCH and carrying a CSI report.

Mode II:

The target signaling further includes a second signaling; the second signaling carries indication information of the first object; and the indication information of the first object is used for indicating an index of the first object.

Specifically, the target signaling includes the first signaling and the second signaling. The index of the first object may be an index of the first object among the plurality of objects, or may be an absolute object identifier.

Optionally, in step 301, the terminal determines a reference signal (RS) resource of a first object based on the target signaling, which includes:

The terminal determines the first object from the plurality of objects based on the first signaling and the second signaling; and the terminal determines the RS resource of the first object based on the configuration information of the RS resources of the plurality of objects.

Specifically, the terminal obtains the index of the first object based on the second signaling, and searches the plurality of objects included in the first signaling for the first object by using the index, thereby determining the first object. The terminal determines the RS resource of the first object based on the configuration information of the RS resource of the first object included in the first signaling, namely, the terminal may determine the RS resource of the first object based on the first signaling and the second signaling.

In specific implementation, the index of the first object is indicated in advance to the terminal through an MAC CE or DCI in the second signaling. After the terminal successfully receives the MAC CE or the DCI, the CSI-RS for CSI and the TRS of the first object takes effect immediately. The terminal may obtain accurate time-frequency synchronization information of the first object through the TRS of the first object, may obtain a CSI report through the CSI-RS of the first object, and report the CSI report to the current service object or the first object.

Optionally, the method of this embodiment further includes: The terminal determines, according to a second preset rule, start time and end time between which the RS resource of the first object is effective. The second preset rule includes: the RS resource of the first object taking effect after the second signaling takes effect and losing effect after a fourth signaling takes effect. The fourth signaling is a signaling for releasing an RS resource configuration of the first object or a fifth signaling; and the fifth signaling is a second signaling with a start symbol later than a start symbol of a second signaling that currently takes effect.

The fifth signaling is a signaling with the start symbol later than the start symbol of the second signaling that currently takes effect. For example, the fifth signaling is a next second signaling.

Specifically, in a case that the RS resource is a periodic RS resource, the start time for the RS resource of the first object to be effective is the first symbol after the second signaling takes effect, and the end time for the RS resource of the first object to be effective is time at which the terminal receives a radio resource control signaling for releasing the configuration information of the RS resource or the first symbol at which the next second signaling takes effect.

In a case that the RS resource is a semi-persistent RS resource, the start time for the RS resource of the first object to be effective is the first symbol at which an MAC CE for activating the semi-persistent RS resource takes effect. The MAC CE for activating the semi-persistent RS resource is after the second signaling. The end time for the RS resource of the first object to be effective is the first symbol at which an MAC CE for deactivating the semi-persistent RS resource takes effect. The MAC CE for deactivating the semi-persistent RS resource is after the second signaling.

In a case that the RS resource is an aperiodic RS resource, the start time for the RS resource of the first object to be effective is a last symbol of a PDCCH for activating the aperiodic RS resource. The PDCCH is after the second signaling. The end time for the RS resource of the first object to be effective is a last symbol of a physical uplink shared channel (PUSCH) triggered by a PDCCH and carrying a CSI report.

Mode III:

The target signaling further includes a second signaling; the second signaling is used for activating at least one aperiodic RS resource; the at least one aperiodic RS resource includes at least one target aperiodic RS resource; and the at least one target aperiodic RS resource is associated with at least one of the plurality of objects.

Specifically, the target signaling includes the first signaling and the second signaling. The second signaling in this embodiment is used for activating the at least one aperiodic RS resource. The at least one aperiodic RS resource includes a target aperiodic RS resource of at least one of the plurality of objects.

Optionally, in step 301, the terminal determines a reference signal (RS) resource of a first object based on the target signaling, which includes:

The terminal determines the at least one object associated with the aperiodic RS resource activated by the second signaling as the first object; and
The terminal determines the target aperiodic RS resource activated by the second signaling and associated with the at least one object as the RS resource of the first object.

Specifically, the second signaling is used for activating the at least one aperiodic RS resource; the at least one aperiodic RS resource includes the at least one target aperiodic RS resource; and the at least one target aperiodic RS resource is associated with the at least one of the plurality of objects. The terminal determines the at least one object associated with the aperiodic RS resource activated by the second signaling to be the first object, and determines the target aperiodic RS resource, activated by the second signaling and associated with the at least one object, to be the RS resource of the first object. Namely, the terminal may determine the RS resource of the first object based on the second signaling.

In the above implementation, before cell switching, the network side device triggers the measurement of the aperiodic RS of the first object through the MAC CE or the DCI in the second signaling. When the terminal successfully receives the MAC CE or the DCI, the aperiodic RS resource of the first object indicated in the MAC CE or the DCI takes effect, and the terminal may execute accurate time-frequency synchronization and CSI measurement according to the effective RS.

Optionally, the method of this embodiment further includes: The terminal determines, according to a third preset rule, start time and end time between which the RS resource of the first object is effective. The third preset rule includes: the start time for the RS resource of the first object to be effective being a last symbol of the second signaling, and the end time for the RS resource of the first object to be effective being a last symbol of the aperiodic RS resource activated by the second signaling.

Mode IV:

The target signaling further includes a second signaling; the second signaling is used for activating at least one aperiodic CSI report; the at least one aperiodic CSI report is associated with at least one RS resource; and the at least one RS resource is associated with at least one of the plurality of objects.

Specifically, the target signaling includes the first signaling and the second signaling. The second signaling in this embodiment is used for activating the at least one aperiodic CSI report. The at least one aperiodic CSI report is associated with the RS resource of the at least one of the plurality of objects.

Optionally, in step 301, the terminal determines a reference signal (RS) resource of a first object based on the target signaling, which includes:

The terminal determines the at least one object associated with the aperiodic RS resource associated with the at least one aperiodic CSI report activated by the second signaling as the first object; and
the terminal determines the RS resource activated by the second signaling and associated with the at least one object as the RS resource of the first object.

Specifically, the second signaling is used for activating the at least one aperiodic CSI report; the at least one aperiodic CSI report is associated with the at least one RS resource; and the at least one RS resource is associated with the at least one of the plurality of objects. The terminal determines the at least one object associated with the RS resource activated by the second signaling and associated with the aperiodic CSI report to be the first object, and determines the RS resource activated by the second signaling and associated with the at least one object to be the RS resource of the first object. Namely, the terminal may determine the RS resource of the first object based on the second signaling.

In specific implementation, before cell switching, the network side device triggers CSI reporting through the DCI in the second signaling. The CSI reporting is associated with the RS resource of the at least one first object. When the terminal successfully receives the MAC CE or the DCI, the MAC CE or the DCI indicates that the RS associated with the first object in the CSI reporting takes effect, and the terminal may execute accurate time-frequency synchronization and CSI measurement according to the effective RS.

Optionally, the method of this embodiment further includes: The terminal determines, according to a fourth preset rule, start time and end time between which the RS resource of the first object is effective. The fourth preset rule includes: the start time for the RS resource of the first object to be effective being a last symbol of the second signaling, and the end time for the RS resource of the first object to be effective being a last symbol of an uplink channel resource that carries the at least one aperiodic CSI report activated by the second signaling.

Mode V:

The target signaling further includes a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

Specifically, the target signaling includes the first signaling and the third signaling. The index of the first object may be an index of the first object among the plurality of objects, or may be an absolute object identifier. The at least one CSI report is associated with the RS resource of at least one of the plurality of objects.

Optionally, in step 301, the terminal determines a reference signal (RS) resource of a first object based on the target signaling, which includes:

The terminal determines the first object from the plurality of objects based on the indication information of the first object; and
the terminal determines the RS resource of the first object according to the indication information of the RS resource and/or the indication information of the CSI report configuration.

Specifically, the terminal obtains the index of the first object based on the third signaling, and searches the plurality of objects included in the first signaling for the first object by using the index, thereby determining the first object. The terminal determines at least one RS resource of the first object indicated by the indication information of the RS resource as the RS resource of the first object, and/or, the terminal determines the RS resource of at least one of the plurality of objects associated with the at least one CSI report as the RS resource of the first object. Namely, the terminal may determine the RS resource of the first object based on the first signaling and the third signaling.

In specific implementation, when instructing cell switching, the network side device simultaneously triggers the measurement of the aperiodic RS of the first object through the third signaling, or triggers the aperiodic CSI reporting of the first object through the DCI. After a switching signaling takes effect, the aperiodic RS resource of the first object indicated in the switching signaling takes effect, or the RS associated with the first object in the CSI reporting indicated in the switching signaling takes effect, and the terminal may execute accurate time-frequency synchronization and CSI measurement according to the effective RS.

Optionally, the method of this embodiment further includes: The terminal determines, according to a fifth preset rule, start time and end time between which the RS resource of the first object is effective. The fifth preset rule includes: the start time for the RS resource of the first object to be effective being a last symbol of the third signaling or the first symbol after the third signaling takes effect, and the end time for the RS resource of the first object to be effective being a last symbol of the RS resource indicated by the third signaling or a last symbol of an uplink channel resource that carries the CSI report indicated by the third signaling.

Optionally, step 302 may include: The terminal executes the CSI measurement and reporting on the RS resource of the first object according to a measurement and scheduling restriction criterion or a CPU usage criterion.

In this embodiment, the terminal executes, according to the measurement and scheduling restriction criterion, the CSI measurement and reporting that is activated in advance on the RS resource of the first object, to avoid a conflict with the measurement and transmission of the current service object and improve the effectiveness of measurement and scheduling. Similarly, the terminal executes the CSI measurement and reporting on the RS resource of the first object according to the CPU usage criterion, so that the usage quantity and/or time of CPUs may be properly configured, to further improve the efficiency of CSI measurement and reporting.

Optionally, the terminal executes the CSI measurement and reporting on the RS resource of the first object according to a measurement and scheduling restriction criterion, which includes:

The terminal executes the CSI measurement and reporting on the RS resource of the first object according to any one of the following measurement and scheduling restriction criteria:

no measurement and scheduling restriction is provided;

the terminal does not receive and/or does not measure an RS resource, overlapping a synchronization signal block (SSB) resource in a frequency domain, of the first object, where the SSB resource is an SSB resource associated with the first object or a current service object;

the terminal does not receive and/or does not measure an RS resource, that overlapping an RS resource of the current service object in a time domain, of the first object; and

on a time domain resource of a first target resource, the terminal does not monitor downlink transmission of the current service object, where the downlink transmission includes a physical downlink control channel (PDCCH), a physical downlink shared channel (PDSCH), and a reference signal, where there are X1 symbols between the first symbol of the first target resource and the first symbol of the RS resource of the first object, and there are Y1 symbols between the last symbol of the first target resource and the last symbol of the RS resource of the first object, X1 and Y1 being positive integers. Optionally, values of X1 and Y1 are determined according to factors such as a downlink timing difference between the first object and the current service object, and an SCS. A time domain resource unit may be any one of the following: symbol, slot, frame, nanosecond (ns), microsecond (us), millisecond (ms), and second (s).

On a time domain resource of a second target resource, the terminal does not execute uplink transmission of the current service object, where the uplink transmission includes a sounding reference signal (SRS), a physical uplink control channel (PUCCH), and a physical uplink shared channel (PUSCH), where there are X2 symbols between the first symbol of the second target resource and the first symbol of the RS resource of the first object, and there are Y2 symbols between the last symbol of the second target resource and the last symbol of the RS resource of the first object, X2 and Y2 being positive integers. Values of X2 and Y2 are determined according to factors such as an uplink or downlink timing difference between the first object and the current service object, an SCS, and SCSs of uplink and downlink of the current service object. A time domain resource unit may be any one of the following: symbol, slot, frame, nanosecond (ns), microsecond (us), millisecond (ms), and second (s).

In this embodiment, the terminal executes, according to the measurement and scheduling restriction criterion, the CSI measurement and reporting that is activated in advance on the RS resource of the first object, to avoid a conflict with the measurement and transmission of the current service object and improve the effectiveness of measurement and scheduling.

Optionally, the CPU usage criterion includes: a CPU usage quantity criterion and/or a CPU usage time criterion.

Specifically, the CPU usage quantity criterion includes at least one of the following:

a quantity of CPU used by a CSI report associated with the RS resource of the first object is a quantity of RS resource for channel measurement that is associated with the CSI report;

the quantity of the CPU used by the CSI report associated with the RS resource of the first object is 1; and the quantity of the CPU used by the CSI report associated with the RS resource of the first object is N, where N is configured according to the capability of the terminal or is agreed by a protocol.

The CPU usage time criterion includes at least one of the following:

starting with the first symbol of the earliest RS resource of an RS transmission event corresponding to the RS resource of the first object associated with the latest CSI report that is not later than first reference time, and ending with the last symbol of an uplink resource carrying the CSI report, where a valid downlink slot of at least one first object exists before the first reference time, or an RS resource of at least one first object exists before the first reference time;

starting with the last symbol of a PDCCH triggering a CSI report, and ending with the last symbol of an uplink resource carrying the CSI report, where a valid downlink slot of at least one first object or an RS resource of at least one first object exists between the PDCCH and the uplink resource carrying the CSI report;

starting with the first symbol of the earliest RS resource of each RS transmission event corresponding to the RS resource of the first object associated with the CSI report, and ending with Z1 symbols after the last symbol of the last RS resource of each RS transmission event corresponding to the RS resource of the first object associated with the CSI report, where a value of Z1 is configured according to the capability of the terminal or is agreed by a protocol; and

starting with the last symbol of a PDCCH triggering a CSI report, and ending with the last symbol of Z2 symbols after the last symbol of the PDCCH triggering the CSI report and Z1 symbols after the last symbol of the RS resource of the first object associated with the CSI report, where a value of Z2 needs to be determined based on at least one of the following: 1. a valid downlink slot of at least one first object or an RS resource of at least one first object exists between the last symbol of the PDCCH triggering the CSI report and the Z2 symbols after the last symbol of the PDCCH triggering the CSI report; and 2. the capability of the terminal.

In this embodiment, the terminal executes the CSI measurement and reporting on the RS resource of the first object according to the CPU usage criterion, so that the usage quantity and/or time of CPUs may be properly configured, to further improve the efficiency of CSI measurement and reporting.

Optionally, in a case that the CPU usage criterion includes the CPU usage time criterion, a total quantity of CPUs used by first CSI measurement and reporting and second CSI measurement and reporting does not exceed a preset maximum quantity of CPUs, where the first CSI measurement and reporting is CSI measurement and reporting associated with the RS resource of the first object, and the second CSI measurement and reporting is CSI measurement and reporting associated with the RS resource associated with the current service object. The preset maximum quantity of CPUs is based on the capability of the terminal or is agreed by a protocol.

Optionally, step 302 may include: The terminal executes CSI measurement based on the active RS resources of the first object, to obtain a CSI report including a CSI measurement result; and the terminal reports the CSI report to the network side device through the uplink channel resource.

Specifically, the active RS resources of the first object are active RS resources among the RS resources of the first object, and the terminal executes the CSI measurement based on the active RS resources of the first object. The uplink channel resource includes at least one of the following: a physical uplink control channel (PUCCH) resource, a physical uplink shared channel (PUSCH) resource, and a configuration permission resource.

Optionally, the first symbol of the uplink channel resource is not earlier than X3 symbols after the last symbol of the RS resource of the first object associated with the CSI report, and X3 is a positive integer. X3 is determined according to the capability of the terminal, is agree by a protocol, or is determined according to a network configuration.

Optionally, the terminal reports the CSI report to the network side device through the uplink channel resource, which includes:

The terminal reports the CSI report to the network side device through the uplink channel resource according to at least one of following CSI report priority rules:

a priority of a beam report associated with the RS resource of the first object is higher than a priority of the CSI report associated with the RS resource of the first object;

the priority of the beam report associated with the RS resource of the first object is higher than a priority of the CSI report associated with the RS resource of the current service object; and

the priority of the CSI report associated with the RS resource of the first object is higher than the priority of the CSI report associated with the RS resource of the current service object.

In this embodiment, the terminal reports the CSI report to the network side device through the uplink channel resource according to the CSI report priority rule, which can further increase the reporting speed of the CSI report.

Optionally, the terminal determines a quantity of active RS resource of the first object according to at least one of the following:

a quantity of RS resource in the configuration information of the plurality of objects;
a quantity of RS resource of a first object associated with all CSI report configurations in the first object;
a quantity of RS resource in the configuration information of the first object;
a quantity of aperiodic RS resource, activated by the second signaling, of the first object;
a quantity of RS resource, associated with the aperiodic CSI report triggered by the second signaling, of the first object;
a quantity of RS resource, indicated by the third signaling, of the first object; and
a quantity of RS resource, associated with the CSI report indicated by the third signaling, of the first object.

In this embodiment, the active RS resource of the first object and the quantity of the active RS resource may be defined in various manners, so that there is flexibility in specific implementation.

Optionally, the quantity of the active RS resource of the first object in an active bandwidth part within the start time and end time between which the RS resource of the first object is effective does not exceed an RS resource quantity range indicated by first terminal capability information; or, a sum of the quantity of the active RS resource of the first object in the active bandwidth part within the start time and end time between which the RS resource of the first object is effective and a quantity of active RS resource of the current service object does not exceed an RS resource quantity range indicated by second terminal capability information. The first terminal capability information is used for indicating a maximum quantity of active RS resource of the first object supported by the terminal, and the second terminal capability information is used for indicating a maximum quantity of cross-cell active RS resource supported by the terminal.

This embodiment can define, according to the capability of the terminal, the quantity of the active RS resources of the first object in the active bandwidth part within the start time and end time between which the RS resource of the first object is effective.

FIG. 5 is a flowchart II of a channel state information measurement and reporting method according to an embodiment of this application. As shown in FIG. 5, the method provided in this embodiment includes:

Step 501. A network side device sends a target signaling to a terminal. The target signaling is a signaling sent before the terminal accesses a first object.
Step 502. The network side device receives a CSI report reported by the terminal. The CSI report is obtained by measurement based on an RS resource of the first object, and the RS resource of the first object is determined based on the target signaling.

Optionally, the target signaling includes a first signaling; the first signaling is used for indicating configuration information of a plurality of obj ects; the plurality of objects include the first object or the first object and a current service object; the first object is different from the current service object; the configuration information of the current service object may be carried by the first signaling or a fourth signaling; and the first symbol of the fourth signaling is earlier than the first symbol of the first signaling.

Optionally, the target signaling further includes a second signaling; the second signaling carries indication information of the first object; and the indication information of the first object is used for indicating an index of the first object.

Optionally, the target signaling further includes a second signaling; the second signaling is used for activating at least one aperiodic RS resource; the at least one aperiodic RS resource includes at least one target aperiodic RS resource; and the at least one target aperiodic RS resource is associated with at least one of the plurality of objects.

Optionally, the target signaling further includes a second signaling; the second signaling is used for activating at least one aperiodic CSI report; the at least one aperiodic CSI report is associated with at least one RS resource; and the at least one RS resource is associated with at least one of the plurality of objects.

Optionally, the target signaling further includes a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

An executive body of the channel state information measurement and reporting method provided in this embodiment of this application may be a channel state information CSI measurement and reporting apparatus. In the embodiments of this application, use of the channel state information (CSI) measurement and reporting apparatus to explain the channel state information (CSI) measurement and reporting method provided in this embodiment of this application is taken as an example.

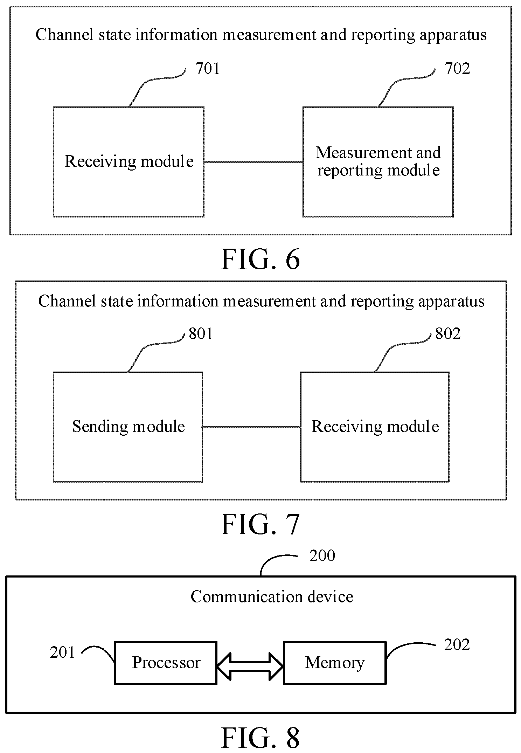

FIG. 6 is a schematic structural diagram I of a channel state information measurement and reporting apparatus according to an embodiment of this application. As shown in FIG. 6, the channel state information measurement and reporting apparatus provided in this embodiment includes:

a receiving module 701, configured to: receive a target signaling sent by a network side device, and determine a reference signal (RS) resource of a first object based on the target signaling, where the target signaling is a signaling obtained before the terminal accesses the first object; and

a measurement and reporting module 702, configured to execute CSI measurement and reporting based on the RS resource of the first object.

Optionally, the target signaling includes a first signaling; the first signaling is used for indicating configuration information of a plurality of obj ects; the plurality of objects include the first object, or the first object and a current service object; and the first object is different from the current service object.

Optionally, the receiving module 701 is specifically configured to:

determine the first object based on the plurality of objects included in the first signaling; and

determine the RS resource of the first object based on the configuration information of the plurality of objects included in the first signaling.

Optionally, the apparatus further includes:

a time determining module 703, configured to determine, according to a first preset rule, start time and end time between which the RS resource of the first object is effective. The first preset rule includes: the RS resource of the first object taking effect after the terminal receives the first signaling, and losing effect after the terminal receives a signaling for releasing an RS resource configuration of the first object.

Optionally, the target signaling further includes a second signaling; the second signaling carries indication information of the first object; and the indication information of the first object is used for indicating an index of the first object.

Optionally, the receiving module 701 is specifically configured to:

determine the first object from the plurality of objects based on the first signaling and the second signaling; and

determine the RS resource of the first object based on the configuration information of the RS resources of the plurality of objects.

Optionally, the time determining module 703 is further configured to determine, according to a second preset rule, start time and end time between which the RS resource of the first object is effective. The second preset rule includes: the RS resource of the first object taking effect after the second signaling takes effect and losing effect after a fourth signaling takes effect. The fourth signaling is a signaling for releasing an RS resource configuration of the first object or a fifth signaling; and the fifth signaling is a second signaling with a start symbol later than a start symbol of a second signaling that currently takes effect.

Optionally, the target signaling further includes a second signaling; the second signaling is used for activating at least one aperiodic RS resource; the at least one aperiodic RS resource includes at least one target aperiodic RS resource; and the at least one target aperiodic RS resource is associated with at least one of the plurality of objects.

Optionally, the receiving module 701 is specifically configured to:

determine the at least one object associated with the aperiodic RS resource activated by the second signaling as the first object; and

determine the target aperiodic RS resource activated by the second signaling and associated with the at least one object as the RS resource of the first object.

Optionally, the time determining module 703 is further configured to determine, according to a third preset rule, start time and end time between which the RS resource of the first object is effective. The third preset rule includes: the start time for the RS resource of the first object to be effective being a last symbol of the second signaling, and the end time for the RS resource of the first object to be effective being a last symbol of the aperiodic RS resource activated by the second signaling.

Optionally, the target signaling further includes a second signaling; the second signaling is used for activating at least one aperiodic CSI report; the at least one aperiodic CSI report is associated with at least one RS resource; and the at least one RS resource is associated with at least one of the plurality of objects.

Optionally, the receiving module 701 is specifically configured to:

determine the at least one object associated with the aperiodic RS resource associated with the at least one aperiodic CSI report activated by the second signaling as the first object; and
determine the RS resource activated by the second signaling and associated with the at least one object as the RS resource of the first object.

Optionally, the time determining module 703 is further configured to determine, according to a fourth preset rule, start time and end time between which the RS resource of the first object is effective. The fourth preset rule includes: the start time for the RS resource of the first object to be effective being a last symbol of the second signaling, and the end time for the RS resource of the first object to be effective being a last symbol of an uplink channel resource that carries the at least one aperiodic CSI report activated by the second signaling.

Optionally, the target signaling further includes a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

Optionally, the receiving module 701 is specifically configured to:

determine the first object from the plurality of objects based on the indication information of the first object; and
determine the RS resource of the first object according to the indication information of the RS resource and/or the indication information of the CSI report configuration.

Optionally, the time determining module 703 is further configured to determine, according to a fifth preset rule, start time and end time between which the RS resource of the first object is effective. The fifth preset rule includes: the start time for the RS resource of the first object to be effective being a last symbol of the third signaling or the first symbol after the third signaling takes effect, and the end time for the RS resource of the first object to be effective being a last symbol of the RS resource indicated by the third signaling or a last symbol of an uplink channel resource that carries the CSI report indicated by the third signaling.

Optionally, the apparatus further includes a quantity determining module 704, configured to: determine a quantity of active RS resource of the first object according to at least one of the following:

a quantity of RS resource in the configuration information of the plurality of objects;
a quantity of RS resource of a first object associated with all CSI report configurations in the first object;
a quantity of RS resource in the configuration information of the first object;
a quantity of aperiodic RS resource, activated by the second signaling, of the first object;
a quantity of RS resource, associated with the aperiodic CSI report triggered by the second signaling, of the first object;
a quantity of RS resource, indicated by the third signaling, of the first object; and
a quantity of RS resource, associated with the CSI report indicated by the third signaling, of the first object.

Optionally, the quantity of the active RS resource of the first object in an active bandwidth part within the start time and end time between which the RS resource of the first object is effective does not exceed an RS resource quantity range indicated by first terminal capability information; or,
a sum of the quantity of the active RS resource of the first object in the active bandwidth part within the start time and end time between which the RS resource of the first object is effective and a quantity of active RS resource of the current service object does not exceed an RS resource quantity range indicated by second terminal capability information.

Optionally, the first terminal capability information is used for indicating a maximum quantity of active RS resource of the first object supported by the terminal, and the second terminal capability information is used for indicating a maximum quantity of cross-cell active RS resource supported by the terminal.

Optionally, the measurement and reporting module 702 is specifically configured to:
execute the CSI measurement and reporting on the RS resource of the first object according to a measurement and scheduling restriction criterion or a CPU usage criterion.

Optionally, the measurement and reporting module 702 is specifically configured to: execute the CSI measurement and reporting on the RS resource of the first object according to any one of the following measurement and scheduling restriction criteria:

> no measurement and scheduling restriction is provided;
>
> the terminal does not receive and/or does not measure an RS resource, overlapping a synchronization signal block (SSB) resource in a frequency domain, of the first object, where the SSB resource is an SSB resource associated with the first object or a current service object;
>
> the terminal does not receive and/or does not measure an RS resource, overlapping an RS resource of the current service object in a time domain, of the first object;
>
> on a time domain resource of a first target resource, the terminal does not monitor downlink transmission of the current service object, where the downlink transmission includes a physical downlink control channel (PDCCH), a physical downlink shared channel (PDSCH), and a reference signal, where there are X1 symbols between the first symbol of the first target resource and the first symbol of the RS resource of the first object, and there are Y1 symbols between the last symbol of the first target resource and the last symbol of the RS resource of the first object, X1 and Y1 being positive integers; and
>
> on a time domain resource of a second target resource, the terminal does not execute uplink transmission of the current service object, where the uplink transmission includes a sounding reference signal (SRS), a physical uplink control channel (PUCCH), and a physical uplink shared channel (PUSCH), where there are X2 symbols between the first symbol of the second target resource and the first symbol of the RS resource of the first object, and there are Y2 symbols between the last symbol of the second target resource and the last symbol of the RS resource of the first object, X2 and Y2 being positive integers.

Optionally, the CPU usage criterion includes: a CPU usage quantity criterion and/or a CPU usage time criterion.

Optionally, in a case that the CPU usage criterion includes the CPU usage time criterion, a total quantity of CPUs used by first CSI measurement and reporting and second CSI measurement and reporting does not exceed a preset maximum quantity of CPUs, where the first CSI measurement and reporting is CSI measurement and reporting associated with the RS resource of the first object, and the second CSI measurement and reporting is CSI measurement and reporting associated with the RS resource associated with the current service object.

Optionally, the measurement and reporting module 702 is specifically configured to:

> execute the CSI measurement based on the active RS resources of the first object, to obtain a CSI report including a CSI measurement result; and
>
> report the CSI report to the network side device through the uplink channel resource.

Optionally, the first symbol of the uplink channel resource is not earlier than X3 symbols after the last symbol of the RS resource of the first object associated with the CSI report, and X3 is a positive integer.

Optionally, the measurement and reporting module 702 is specifically configured to: report the CSI report to the network side device through the uplink channel resource according to at least one of following CSI report priority rules:

> a priority of a beam report associated with the RS resource of the first object is higher than a priority of the CSI report associated with the RS resource of the first object;
>
> the priority of the beam report associated with the RS resource of the first object is higher than a priority of the CSI report associated with the RS resource of the current service object; and
>
> the priority of the CSI report associated with the RS resource of the first object is higher than the priority of the CSI report associated with the RS resource of the current service object.

Optionally, the configuration information of the plurality of objects includes higher-layer configuration information and/or physical layer configuration information.

Optionally, the physical layer configuration information includes at least one of the following: configuration information of the RS resource, configuration information of CSI reporting, frequency domain information, subcarrier spacing (SCS) information, cell radio network temporary identifier (C-RNTI) information, physical uplink control channel (PUCCH) information, configuration permission information, pass loss reference signal (PL-RS) information, random access channel (RACH) resource information, quasi co-location (QCL) information, and spatial relationship information.

Optionally, the configuration information of the CSI reporting in the configuration information of the current service object is associated with the RS resource of the first object.

The apparatus of this embodiment may be configured to perform the method of any embodiment of the foregoing terminal side method embodiments. The specific implementation process and technical effects of the apparatus are similar to those of the terminal side method embodiment, which can be specifically found in the detailed description of the terminal side method embodiment and will not be elaborated here.

FIG. 7 is a schematic structural diagram II of a channel state information measurement and reporting apparatus according to an embodiment of this application. As shown in FIG. 7, the channel state information measurement and reporting apparatus provided in this embodiment includes:

a sending module 801, configured to send a target signaling to a terminal, where the target signaling is a signaling sent before the terminal accesses a first object.

a receiving module 802, configured to receive a CSI report reported by the terminal, where the CSI report is obtained by measurement based on an RS resource of the first object, and the RS resource of the first object is determined based on the target signaling.

Optionally, the target signaling includes a first signaling; the first signaling is used for indicating configuration information of a plurality of obj ects; the plurality of objects include the first object, or the first object and a current service object; and the first object is different from the current service object.

Optionally, the target signaling further includes a second signaling; the second signaling carries indication information of the first object; and the indication information of the first object is used for indicating an index of the first object.

Optionally, the target signaling further includes a second signaling; the second signaling is used for activating at least one aperiodic RS resource; the at least one aperiodic RS resource includes at least one target aperiodic RS resource; and the at least one target aperiodic RS resource is associated with at least one of the plurality of objects.

Optionally, the target signaling further includes a second signaling; the second signaling is used for activating at least one aperiodic CSI report; the at least one aperiodic CSI report is associated with at least one RS resource; and the at least one RS resource is associated with at least one of the plurality of objects.

Optionally, the target signaling further includes a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

The apparatus of this embodiment may be configured to perform the method of any embodiment of the foregoing terminal side method embodiments. The specific implementation process and technical effects of the apparatus are similar to those of the terminal side method embodiment, which can be specifically found in the detailed description of the terminal side method embodiment and will not be elaborated here.

The channel state information measurement and reporting apparatus in this embodiment of this application may be an electronic device, or may be a component in an electronic device, such as an integrated circuit or a chip. The electronic device may be a terminal or another device except a terminal. Exemplarily, the terminal may include, but is not limited to, the types of the terminal 11 listed above, and the another device may be a server, a network attached storage (Network Attached Storage, NAS), a personal computer (personal computer, PC), a television (television, TV), a teller machine, a self-service machine, and the like. The embodiments of this application do not impose a specific limitation on this.

The channel state information measurement and reporting apparatus provided in the embodiments of this application may be an apparatus with an operating system. The operating system may be an Android (Android) operating system, may be an ios operating system, or may be another possible operating system, and is not specifically limited in the embodiments of this application.

The channel state information measurement and reporting apparatus provided in the embodiments of this application can implement all the processes implemented by the method embodiment shown in FIG. 3 to FIG. 5 and achieve the same technical effects, details of which are omitted here for brevity.

Optionally, as shown in FIG. 8, the embodiments of this application further provide a communication device 200, including a processor 201 and a memory 202. The memory 202 stores programs or instructions runnable on the processor 201. For example, when the communication device 200 is a terminal, the programs or instructions, when run by the processor 201, implement all the steps of the above channel state information measurement and reporting method embodiments, and can achieve the same technical effects. When the communication device 200 is a network side device, the programs or instructions, when run by the processor 201, implement all the steps of the above channel state information measurement and reporting method embodiment, and can achieve the same technical effects, details of which are omitted here for brevity.

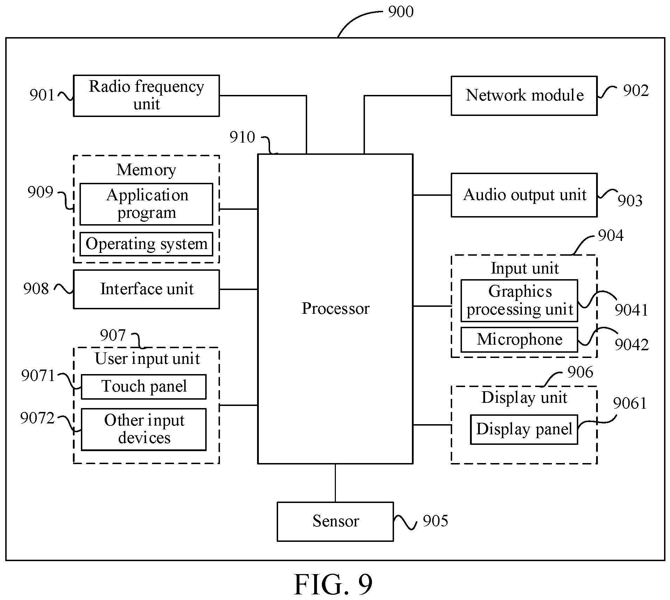

The embodiments of this application further provide a terminal, including a processor and a communication interface. The communication interface is configured to receive a target signaling sent by a network side device, and the processor is configured to determine a reference signal (RS) resource of a first object based on the target signaling. The target signaling is a signaling obtained before the terminal accesses the first object. The processor is configured to execute CSI measurement based on the RS resource of the first object. The communication interface is configured to execute CSI reporting based on the RS resource of the first object. The terminal embodiment corresponds to the terminal side method embodiment described above. All the implementation processes and implementations of the above method embodiment can be applied to the terminal embodiment, and can achieve the same technical effect. Specifically, FIG. 9 is a schematic structural diagram of hardware of a terminal for implementing the embodiments of this application.

The terminal 900 includes, but is not limited to: at least some of a radio frequency unit 901, a network module 902, an audio output unit 903, an input unit 904, a sensor 905, a display unit 906, a user input unit 907, an interface unit 908, a memory 909, a processor 910, and the like.

Those skilled in the art can understand that the terminal 900 further includes a power supply (such as a battery) for supplying power to the various components. The power supply may be logically connected to the processor 910 by using a power management system, thereby implementing functions such as charging, discharging, and power consumption management by using the power management system. The structures of the terminal shown in FIG. 9 constitute no limitation on the terminal, and the terminal may include more or fewer components than those shown in the figure, or some components may be combined, or a different component deployment may be used, details of which are omitted here.

It should be understood that in the embodiments of this application, the input unit 904 may include a graphics processing unit (Graphics Processing Unit, GPU) 9041 and a microphone 9042, and the GPU 9041 processes image data of static pictures or videos obtained by an image capturing apparatus (such as a camera) in a video capturing mode or an image capturing mode. The display unit 906 may include a display panel 9061, and the display panel 9061 may be configured by using a liquid crystal display, an organic light-emitting diode, or the like. The user input unit 907 includes at least one of a touch panel 9071 and another input device 9072. The touch panel 9071 is also referred to as a touch screen. The touch panel 9071 may include two parts: a touch detection apparatus and a touch controller. The another input device 9072 may include, but not limited to, a physical keyboard, a function key (such as a volume control key or a switch key), a track ball, a mouse, and a joystick, which is not described herein again.

In the embodiments of this application, the radio frequency unit 901 receives downlink data from a network side device and can transmit the data to the processor 910 for processing. In addition, the radio frequency unit 901 may transmit uplink data to the network side device. Generally, the radio frequency unit 901 includes, but is not limited to, an antenna, an amplifier, a transceiver, a coupler, a low noise amplifier, a duplexer, and the like.

The memory 909 may be configured to store a software program and various data. The memory 909 may mainly include a first storage area for storing a program or instructions, and a second storage area for storing data. The first storage area may store an operating system, an application program or instructions required by at least one function (for example, a sound playing function and an image display function), and the like. The memory 909 may be a volatile memory or a non-volatile memory, or the memory 909 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 909 in the embodiments of this application includes these and any other suitable types of memories.

The processor 910 may include one or more processing units. Optionally, the processor 910 may integrate an application processor and a modem processor, where the application processor mainly processes operations involving an operating system, a user interface, an application program, and the like, and the modem processor mainly processes a wireless communication signal, such as a baseband processor. It can be understood that, the modem processor may not be integrated into the processor 910.

The processor 910 is configured to: receive a target signaling sent by a network side device, and determine a reference signal (RS) resource of a first object based on the target signaling, where the target signaling is a signaling obtained before the terminal accesses the first object; and

execute CSI measurement and reporting based on the RS resource of the first object.

In the above implementation, the terminal may acquire the target signaling before accessing the first object, determine the reference signal (RS) resource of the first object based on the target signaling, and execute the CSI measurement and reporting based on the RS resource of the first object, so that obtaining time of the target signaling is advanced from "after the terminal accesses the first object" to "before the terminal accesses the first object", and a CSI result of the first object can be quickly reported. Therefore, the terminal can execute downlink transmission and reception as soon as possible after completing cell switching, thereby reducing the interruption time of downlink.

Optionally, the target signaling includes a first signaling; the first signaling is used for indicating configuration information of a plurality of obj ects; the plurality of objects include the first object, or the first object and a current service object; and the first object is different from the current service object.

Optionally, the processor 910 determines a reference signal (RS) resource of a first object based on the target signaling, which includes:

> determining the first object based on the plurality of objects included in the first signaling; and
> determining the RS resource of the first object based on the configuration information of the plurality of objects included in the first signaling.

In the above implementation, the terminal may determine the RS resource of at least one first object based on the first signaling.

Optionally, the processor 910 is further configured to:
determine, according to a first preset rule, start time and end time between which the RS resource of the first object is effective. The first preset rule includes: the RS resource of the first object taking effect after the terminal receives the first signaling, and losing effect after the terminal receives a signaling for releasing an RS resource configuration of the first object.

Optionally, the target signaling further includes a second signaling; the second signaling carries indication information of the first object; and the indication information of the first object is used for indicating an index of the first object.

Optionally, the processor 910 determines a reference signal (RS) resource of a first object based on the target signaling, which includes:

> determining the first object from the plurality of objects based on the first signaling and the second signaling; and
> determining the RS resource of the first object based on the configuration information of the plurality of objects.

In the above implementation, the terminal may determine the RS resource of the first object based on the first signaling and the second signaling.

Optionally, the processor 910 is further configured to:
determine, according to a second preset rule, start time and end time between which the RS resource of the first object is effective. The second preset rule includes: the RS resource of the first object taking effect after the second signaling takes effect and losing effect after a fourth signaling takes effect. The fourth signaling is a signaling for releasing an RS resource configuration of the first object or a fifth signaling; and the fifth signaling is a second signaling with a start symbol later than a start symbol of a second signaling that currently takes effect.

Optionally, the target signaling further includes a second signaling; the second signaling is used for activating at least one aperiodic RS resource; the at least one aperiodic RS resource includes at least one target aperiodic RS resource; and the at least one target aperiodic RS resource is associated with at least one of the plurality of objects.

Optionally, the processor 910 determines a reference signal (RS) resource of a first object based on the target signaling, which includes:

> determining the at least one object associated with the aperiodic RS resource activated by the second signaling as the first object; and
> determining the target aperiodic RS resource activated by the second signaling and associated with the at least one object as the RS resource of the first object.

In the above implementation, the terminal may determine the RS resource of the first object based on the second signaling.

Optionally, the processor 910 is further configured to:
determine, according to a third preset rule, start time and end time between which the RS resource of the first object is effective. The third preset rule includes: the start time for the RS resource of the first object to be effective being a last symbol of the second signaling, and the end time for the RS resource of the first object to be effective being a last symbol of the aperiodic RS resource activated by the second signaling.

Optionally, the target signaling further includes a second signaling; the second signaling is used for activating at least one aperiodic CSI report; the at least one aperiodic CSI report is associated with at least one RS resource; and the at least one RS resource is associated with at least one of the plurality of objects.

Optionally, the processor 910 determines a reference signal (RS) resource of a first object based on the target signaling, which includes:

> determining the at least one object associated with the aperiodic RS resource associated with the at least one aperiodic CSI report activated by the second signaling as the first object; and
> determining the RS resource activated by the second signaling and associated with the at least one object as the RS resource of the first object.

In the above implementation, the terminal may determine the RS resource of the first object based on the second signaling.

Optionally, the processor 910 is further configured to:

determine, according to a fourth preset rule, start time and end time between which the RS resource of the first object is effective. The fourth preset rule includes: the start time for the RS resource of the first object to be effective being a last symbol of the second signaling, and the end time for the RS resource of the first object to be effective being a last symbol of an uplink channel resource that carries the at least one aperiodic CSI report activated by the second signaling.

Optionally, the target signaling further includes a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

Optionally, the processor 910 determines a reference signal (RS) resource of a first object based on the target signaling, which includes:

determining the first object from the plurality of objects based on the indication information of the first object; and determining the RS resource of the first object according to the indication information of the RS resource and/or the indication information of the CSI report configuration.

In the above implementation, the terminal may determine the RS resource of the first object based on the first signaling and the third signaling.

Optionally, the processor 910 is further configured to:

determine, according to a fifth preset rule, start time and end time between which the RS resource of the first object is effective. The fifth preset rule includes: the start time for the RS resource of the first object to be effective being a last symbol of the third signaling or the first symbol after the third signaling takes effect, and the end time for the RS resource of the first object to be effective being a last symbol of the RS resource indicated by the third signaling or a last symbol of an uplink channel resource that carries the CSI report indicated by the third signaling.

Optionally, the processor 910 determines a quantity of active RS resource of the first object according to at least one of the following:

a quantity of RS resource in the configuration information of the plurality of objects;
a quantity of RS resource of a first object associated with all CSI report configurations in the first object;
a quantity of RS resource in the configuration information of the first object;
a quantity of aperiodic RS resource, activated by the second signaling, of the first object;
a quantity of RS resource, associated with the aperiodic CSI report triggered by the second signaling, of the first object;
a quantity of RS resource, indicated by the third signaling, of the first object; and
a quantity of RS resource, associated with the CSI report indicated by the third signaling, of the first object.

Optionally, the quantity of the active RS resource of the first object in an active bandwidth part within the start time and end time between which the RS resource of the first object is effective does not exceed an RS resource quantity range indicated by first terminal capability information; or,

a sum of the quantity of the active RS resource of the first object in the active bandwidth part within the start time and end time between which the RS resource of the first object is effective and a quantity of active RS resource of the current service object does not exceed an RS resource quantity range indicated by second terminal capability information.

Optionally, the first terminal capability information is used for indicating a maximum quantity of active RS resource of the first object supported by the terminal, and the second terminal capability information is used for indicating a maximum quantity of cross-cell active RS resource supported by the terminal.

Optionally, the processor 910 executes CSI measurement and reporting based on the RS resource of the first object, which includes:

executing the CSI measurement and reporting on the RS resource of the first object according to a measurement and scheduling restriction criterion or a CPU usage criterion.

In the above implementation, the terminal executes, according to the measurement and scheduling restriction criterion, the CSI measurement and reporting that is activated in advance on the RS resource of the first object, to avoid a conflict with the measurement and transmission of the current service object and improve the effectiveness of measurement and scheduling. Similarly, the terminal executes the CSI measurement and reporting on the RS resource of the first object according to the CPU usage criterion, so that the usage quantity and/or time of CPUs may be properly configured, to further improve the efficiency of CSI measurement and reporting.

Optionally, the processor 910 executes the CSI measurement and reporting on the RS resource of the first object according to a measurement and scheduling restriction criterion, which includes:

executing the CSI measurement and reporting on the RS resource of the first object according to any one of the following measurement and scheduling restriction criteria:

no measurement and scheduling restriction is provided;

the terminal does not receive and/or does not measure an RS resource, overlapping a synchronization signal block (SSB) resource in a frequency domain, of the first object, where the SSB resource is an SSB resource associated with the first object or a current service object;

the terminal does not receive and/or does not measure an RS resource, overlapping an RS resource of the current service object in a time domain, of the first object;

on a time domain resource of a first target resource, the terminal does not monitor downlink transmission of the current service object, where the downlink transmission includes a physical downlink control channel (PDCCH), a physical downlink shared channel (PDSCH), and a reference signal, where there are X1 symbols between the first symbol of the first target resource and the first symbol of the RS resource of the first object, and there are Y1 symbols between the last symbol of the first target resource and the last symbol of the RS resource of the first object, X1 and Y1 being positive integers; and

on a time domain resource of a second target resource, the terminal does not execute uplink transmission of the current service object, where the uplink transmission includes a sounding reference signal (SRS), a physical uplink control channel (PUCCH), and a physical uplink shared channel (PUSCH), where there are X2 symbols between the first symbol of the second target resource and the first symbol of the RS resource of the first object, and there are Y2 symbols between the last symbol of the second target resource and the last symbol of the RS resource of the first object, X2 and Y2 being positive integers.

In the above implementation, the terminal executes, according to the measurement and scheduling restriction criterion, the CSI measurement and reporting that is activated in advance on the RS resource of the first object, to avoid a conflict with the measurement and transmission of the current service object and improve the effectiveness of measurement and scheduling.

Optionally, the CPU usage criterion includes: a CPU usage quantity criterion and/or a CPU usage time criterion.

In the above implementation, the terminal executes the CSI measurement and reporting on the RS resource of the first object according to the CPU usage criterion, so that the usage quantity and/or time of CPUs may be properly configured, to further improve the efficiency of CSI measurement and reporting.

Optionally, in a case that the CPU usage criterion includes the CPU usage quantity criterion, a total quantity of CPUs used by first CSI measurement and reporting and second CSI measurement and reporting does not exceed a preset maximum quantity of CPUs, where the first CSI measurement and reporting is CSI measurement and reporting associated with the RS resource of the first object, and the second CSI measurement and reporting is CSI measurement and reporting associated with the RS resource associated with the current service object.

Optionally, the processor 910 executes CSI measurement and reporting based on the RS resource of the first object, which includes:

executing the CSI measurement based on the active RS resources of the first object, to obtain a CSI report including a CSI measurement result; and

reporting the CSI report to the network side device through the uplink channel resource.

Optionally, the first symbol of the uplink channel resource is not earlier than X3 symbols after the last symbol of the RS resource of the first object associated with the CSI report, and X3 is a positive integer.

Optionally, the processor 910 reports the CSI report to the network side device through the uplink channel resource, which includes:

reporting the CSI report to the network side device through the uplink channel resource according to at least one of following CSI report priority rules:

a priority of a beam report associated with the RS resource of the first object is higher than a priority of the CSI report associated with the RS resource of the first object;

the priority of the beam report associated with the RS resource of the first object is higher than a priority of the CSI report associated with the RS resource of the current service object; and

the priority of the CSI report associated with the RS resource of the first object is higher than the priority of the CSI report associated with the RS resource of the current service object.

Optionally, the configuration information of the plurality of objects includes higher-layer configuration information and/or physical layer configuration information.

Optionally, the physical layer configuration information includes at least one of the following: configuration information of the RS resource, configuration information of CSI reporting, frequency domain information, subcarrier spacing (SCS) information, cell radio network temporary identifier (C-RNTI) information, physical uplink control channel (PUCCH) information, configuration permission information, pass loss reference signal (PL-RS) information, random access channel (RACH) resource information, quasi co-location (QCL) information, and spatial relationship information.

Optionally, the configuration information of the CSI reporting in the configuration information of the current service object is associated with the RS resource of the first object.

The embodiments of this application further provide a network side device, including a processor and a communication interface. The communication interface is configured to send a target signaling, where the target signaling is a signaling sent before the terminal accesses a first object; and the communication interface is configured to receive a CSI report reported by the terminal, where the CSI report is obtained by measurement based on an RS resource of the first object, and the RS resource of the first object is determined based on the target signaling. The network side device embodiment corresponds to the above network side device method embodiment, and all the implementation processes and implementations of the above method embodiment can be applied to the network side device embodiment, and can achieve the same technical effect.

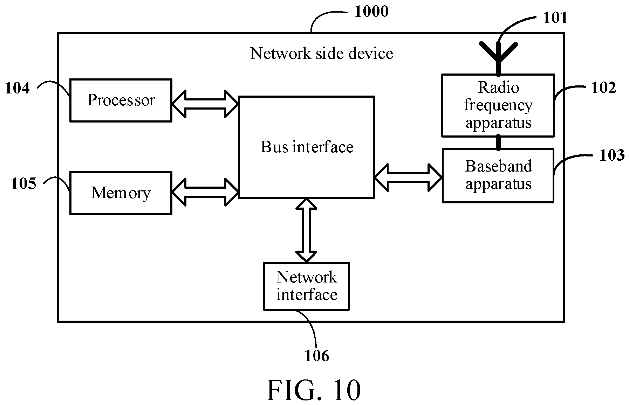

Specifically, the embodiments of this application provide a network side device. As shown in FIG. 10, the network side device 1000 includes: an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101 and sends the received information to the baseband apparatus 103 for processing. In a downlink direction, the baseband apparatus 103 processes information to be sent and sends the information to the radio frequency apparatus 102, and the radio frequency apparatus 102 processes the received information and sends the information via the antenna 101.

The method performed by the network side device in the above embodiment may be implemented in the baseband apparatus 103, and the baseband apparatus 103 includes a baseband processor.

The baseband apparatus 103 may include, for example, at least one baseband board. A plurality of chips are arranged on the baseband board. As shown in FIG. 10, one of the chips is, for example, a baseband processor, connected to the memory 105 through a bus interface to call a program in the memory 105 to perform the operations of the network device shown in the above method embodiment.

The network side device may further include a network interface 106. The interface is, for example, a common public radio interface (common public radio interface, CPRI).

Specifically, the network side device 1000 of the embodiments of this application further includes: instructions or programs stored on the memory 105 and runnable on the processor 104. The processor 104 calls the instructions or programs in the memory 105 to perform the methods performed by the various modules shown in FIG. 7 and achieve the same technical effects. To avoid repetition, details are not described here again.

The embodiments of this application further provide a readable storage medium. The readable storage medium stores programs or instructions. The programs or instructions, when run by a processor, implement all the processes of the above channel state information measurement and reporting method embodiment and can achieve the same technical effects, details of which are omitted here for brevity.

The processor is the processor in the terminal in the embodiments described above. The readable storage medium includes a computer-readable storage medium, for example, a computer read-only memory (ROM), a random access memory (RAM), a magnetic disc, a compact disc, or the like.

The embodiments of this application further provide a chip. The chip includes a processor and a communication interface. The communication interface is coupled to the processor. The processor is configured to run programs or instructions to implement all the processes of the above channel state information measurement and reporting method embodiment, and can achieve the same technical effects, details of which are omitted here for brevity.

It should be understood that the chip mentioned in the embodiments of this application can alternatively be referred to as a system chip, a chip system, or a system-on-chip.

The embodiments of this application further provide a computer program/program product. The computer program/program product is stored in a storage medium. The computer program/program product, when run by at least one processor, implements all the processes of the above channel state information measurement and reporting method embodiment, and can achieve the same technical effects, details of which are omitted here for brevity.

The embodiments of this application further provide a communication system, including: a terminal and a network side device. The terminal can be configured to execute the steps of the channel state information measurement and reporting method described above, and the network side device can be configured to execute the steps of the channel state information measurement and reporting method described above.

It should be noted that, the terms "include", "comprise", or any other variations thereof herein are intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of this application is not limited to executing functions in the order shown or discussed, but may alternatively include executing functions in a substantially simultaneous manner or in an opposite order according to the functions involved. For example, the methods described may be executed in a different order than that described, and various steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially or parts contributing to the related art may be implemented in a form of a computer software product. The computer software product is stored in a storage medium (such as a ROM/RAM, a magnetic disk, or a CD) and includes several instructions for instructing a terminal (which may be a mobile phone, a computer, a server, an air conditioner, a network device, or the like) to perform the methods described in the various embodiments of this application.

The embodiments of this application have been described above with reference to the accompanying drawings. This application is not limited to the specific implementations described above, and the specific implementations described above are merely examples and not limitative. Those of ordinary skill in the art may make various forms under the teaching of this application without departing from the spirit of this application and the protection scope of the claims, and these forms shall all fall within the protection of this application.

**Claims**

1. A channel state information (CSI) measurement and reporting method, comprising:

   receiving, by a terminal, a target signaling sent by a network side device, and determining, by the terminal, a reference signal (RS) resource of a first object based on the target signaling; wherein the target signaling is a signaling obtained before the terminal accesses the first object; and
   executing, by the terminal, CSI measurement and reporting based on the RS resource of the first object.

2. The method according to claim 1, wherein the target signaling comprises a first signaling; the first signaling is used for indicating configuration information of a plurality of objects; the plurality of objects comprise the first object, or the first object and a current service object; and the first object is different from the current service object.

3. The method according to claim 2, wherein the determining, by the terminal, a reference signal (RS) resource of a first object based on the target signaling comprises:

   determining, by the terminal, the first object based on the plurality of objects comprised in the first signaling; and
   determining, by the terminal, the RS resource of the first object based on the configuration information of the plurality of objects comprised in the first signaling.

4. The method according to claim 3, wherein the method further comprises:
   determining, by the terminal according to a first preset rule, start time and end time between which the RS resource of the first object is effective; and the first preset rule comprises: the RS resource of the first object taking effect after the terminal receives the first signaling, and losing effect after the terminal receives a signaling for releasing an RS resource configuration of the first object.

5. The method according to claim 2, wherein the target signaling further comprises a second signaling; the second signaling carries indication information of the first object; and the indication information of the first object is used for indicating an index of the first object.

6. The method according to claim 5, wherein the determining, by the terminal, a reference signal (RS) resource of a first object based on the target signaling comprises:

> determining, by the terminal, the first object from the plurality of objects based on the first signaling and the second signaling; and
> determining, by the terminal, the RS resource of the first object based on the configuration information of the plurality of objects.

7. The method according to claim 6, wherein the method further comprises:
determining, by the terminal according to a second preset rule, start time and end time between which the RS resource of the first object is effective; the second preset rule comprises: the RS resource of the first obj ect taking effect after the second signaling takes effect and losing effect after a fourth signaling takes effect; wherein the fourth signaling is a signaling for releasing an RS resource configuration of the first object or a fifth signaling; and the fifth signaling is a second signaling with a start symbol later than a start symbol of a second signaling that currently takes effect.

8. The method according to claim 2, wherein the target signaling further comprises a second signaling; the second signaling is used for activating at least one aperiodic RS resource; the at least one aperiodic RS resource comprises at least one target aperiodic RS resource; and the at least one target aperiodic RS resource is associated with at least one of the plurality of objects.

9. The method according to claim 8, wherein the determining, by the terminal, a reference signal (RS) resource of a first object based on the target signaling comprises:

> determining, by the terminal, the at least one object associated with the aperiodic RS resource activated by the second signaling as the first object; and
> determining, by the terminal, the target aperiodic RS resource activated by the second signaling and associated with the at least one object as the RS resource of the first object.

10. The method according to claim 9, wherein the method further comprises:
determining, by the terminal according to a third preset rule, start time and end time between which the RS resource of the first object is effective; and the third preset rule comprises: the start time for the RS resource of the first object to be effective being a last symbol of the second signaling, and the end time for the RS resource of the first object to be effective being a last symbol of the aperiodic RS resource activated by the second signaling.

11. The method according to claim 2, wherein the target signaling further comprises a second signaling; the second signaling is used for activating at least one aperiodic CSI report; the at least one aperiodic CSI report is associated with at least one RS resource; and the at least one RS resource is associated with at least one of the plurality of objects.

12. The method according to claim 11, wherein the determining, by the terminal, a reference signal (RS) resource of a first object based on the target signaling comprises:

> determining, by the terminal, the at least one object associated with the RS resource associated with the at least one aperiodic CSI report activated by the second signaling as the first object; and
> determining, by the terminal, the RS resource activated by the second signaling and associated with the at least one object as the RS resource of the first object.

13. The method according to claim 12, wherein the method further comprises:
determining, by the terminal according to a fourth preset rule, start time and end time between which the RS resource of the first object is effective; and the fourth preset rule comprises: the start time for the RS resource of the first object to be effective being a last symbol of the second signaling, and the end time for the RS resource of the first object to be effective being a last symbol of an uplink channel resource that carries the at least one aperiodic CSI report activated by the second signaling.

14. The method according to claim 2, wherein the target signaling further comprises a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

15. The method according to claim 14, wherein the determining, by the terminal, a reference signal (RS) resource of a first object based on the target signaling comprises:

determining, by the terminal, the first object from the plurality of objects based on the indication information of the first object; and
determining, by the terminal, the RS resource of the first object according to the indication information of the RS resource and/or the indication information of the CSI report configuration.

16. The method according to claim 15, wherein the method further comprises:
determining, by the terminal according to a fifth preset rule, start time and end time between which the RS resource of the first object is effective; and the fifth preset rule comprises: the start time for the RS resource of the first object to be effective being a last symbol of the third signaling or a first symbol after the third signaling takes effect, and the end time for the RS resource of the first object to be effective being a last symbol of the RS resource indicated by the third signaling or a last symbol of an uplink channel resource that carries the CSI report indicated by the third signaling.

17. The method according to any one of claims 3 to 16, wherein the terminal determines a quantity of active RS resource of the first object according to at least one of the following:

a quantity of RS resource in the configuration information of the plurality of objects;
a quantity of RS resource of a first object associated with all CSI report configurations in the first object;
a quantity of RS resource in the configuration information of the first object;
a quantity of aperiodic RS resource, activated by the second signaling, of the first object;
a quantity of RS resource, associated with the aperiodic CSI report triggered by the second signaling, of the first object;
a quantity of RS resource, indicated by the third signaling, of the first object; and
a quantity of RS resource, associated with the CSI report indicated by the third signaling, of the first object.

18. The method according to claim 17, wherein

the quantity of the active RS resource of the first object in an active bandwidth part within the start time and end time between which the RS resource of the first object is effective does not exceed an RS resource quantity range indicated by first terminal capability information; or,
a sum of the quantity of the active RS resource of the first object in the active bandwidth part within the start time and end time between which the RS resource of the first object is effective and a quantity of active RS resource of the current service object does not exceed an RS resource quantity range indicated by second terminal capability information.

19. The method according to claim 18, wherein the first terminal capability information is used for indicating a maximum quantity of active RS resource of the first object supported by the terminal, and the second terminal capability information is used for indicating a maximum quantity of cross-cell active RS resource supported by the terminal.

20. The method according to claim 1, wherein the executing, by the terminal, CSI measurement and reporting based on the RS resource of the first object comprises:
executing, by the terminal, the CSI measurement and reporting on the RS resource of the first object according to a measurement and scheduling restriction criterion or a CPU usage criterion.

21. The method according to claim 20, wherein the executing, by the terminal, the CSI measurement and reporting on the RS resource of the first object according to a measurement and scheduling restriction criterion comprises:
executing, by the terminal, the CSI measurement and reporting on the RS resource of the first object according to any one of the following measurement and scheduling restriction criteria:

no measurement and scheduling restriction is provided;
the terminal does not receive and/or does not measure an RS resource, overlapping a synchronization signal block (SSB) resource in a frequency domain, of the first object, wherein the SSB resource is an SSB resource associated with the first object or a current service object;
the terminal does not receive and/or does not measure an RS resource, overlapping an RS resource of the current service object in a time domain, of the first object;
on a time domain resource of a first target resource, the terminal does not monitor downlink transmission of the current service object, wherein the downlink transmission comprises a physical downlink control channel (PDCCH), a physical downlink shared channel (PDSCH), and a reference signal, wherein there are X1 symbols between the first symbol of the first target resource and the first symbol of the RS resource of the first object, and there are Y1 symbols between the last symbol of the first target resource and the last symbol of the RS resource of the first object, X1 and Y1 being positive integers; and

on a time domain resource of a second target resource, the terminal does not execute uplink transmission of the current service object, wherein the uplink transmission comprises a sounding reference signal (SRS), a physical uplink control channel (PUCCH), and a physical uplink shared channel (PUSCH), wherein there are X2 symbols between the first symbol of the second target resource and the first symbol of the RS resource of the first object, and there are Y2 symbols between the last symbol of the second target resource and the last symbol of the RS resource of the first object, X2 and Y2 being positive integers.

22. The method according to claim 20, wherein the CPU usage criterion comprises: a CPU usage quantity criterion and/or a CPU usage time criterion.

23. The method according to claim 22, wherein in a case that the CPU usage criterion comprises the CPU usage time criterion, a total quantity of CPUs used by first CSI measurement and reporting and second CSI measurement and reporting does not exceed a preset maximum quantity of CPUs, wherein the first CSI measurement and reporting is CSI measurement and reporting associated with the RS resource of the first object, and the second CSI measurement and reporting is CSI measurement and reporting associated with the RS resource associated with the current service object.

24. The method according to any one of claims 2 to 23, wherein the executing, by the terminal, CSI measurement and reporting based on the RS resource of the first object comprises:

executing, by the terminal, CSI measurement based on the active RS resource of the first object, to obtain a CSI report comprising a CSI measurement result; and
reporting, by the terminal, the CSI report to the network side device through the uplink channel resource.

25. The method according to claim 24, wherein the first symbol of the uplink channel resource is not earlier than X3 symbols after the last symbol of the RS resource of the first object associated with the CSI report, and X3 is a positive integer.

26. The method according to claim 24, wherein the reporting, by the terminal, the CSI report to the network side device through the uplink channel resource comprises:
reporting, by the terminal, the CSI report to the network side device through the uplink channel resource according to at least one of following CSI report priority rules:

a priority of a beam report associated with the RS resource of the first object is higher than a priority of the CSI report associated with the RS resource of the first object;
the priority of the beam report associated with the RS resource of the first object is higher than a priority of the CSI report associated with the RS resource of the current service object; and
the priority of the CSI report associated with the RS resource of the first object is higher than the priority of the CSI report associated with the RS resource of the current service object.

27. The method according to any one of claims 2 to 26, wherein the configuration information of the plurality of objects comprises higher-layer configuration information and/or physical layer configuration information.

28. The method according to claim 27, wherein the physical layer configuration information comprises at least one of the following: configuration information of the RS resource, configuration information of CSI reporting, frequency domain information, subcarrier spacing (SCS) information, cell radio network temporary identifier (C-RNTI) information, physical uplink control channel (PUCCH) information, configuration permission information, pass loss reference signal (PL-RS) information, random access channel (RACH) resource information, quasi co-location (QCL) information, and spatial relationship information.

29. The method according to claim 28, wherein the configuration information of the CSI reporting in the configuration information of the current service object is associated with the RS resource of the first object.

30. A channel state information (CSI) measurement and reporting method, comprising:

   sending, by a network side device, a target signaling to a terminal, wherein the target signaling is a signaling sent before the terminal accesses a first object; and

   receiving, by the network side device, a CSI report reported by the terminal, wherein the CSI report is obtained by measurement based on an RS resource of the first object, and the RS resource of the first object is determined based on the target signaling.

31. The method according to claim 30, wherein the target signaling comprises a first signaling; the first signaling is used for indicating configuration information of a plurality of objects; the plurality of objects comprise the first object, or the first object and a current service object; and the first object is different from the current service object.

32. The method according to claim 31, wherein the target signaling further comprises a second signaling; the second signaling carries indication information of the first object; and the indication information of the first object is used for indicating an index of the first object.

33. The method according to claim 31, wherein the target signaling further comprises a second signaling; the second signaling is used for activating at least one aperiodic RS resource; the at least one aperiodic RS resource comprises at least one target aperiodic RS resource; and the at least one target aperiodic RS resource is associated with at least one of the plurality of objects.

34. The method according to claim 31, wherein the target signaling further comprises a second signaling; the second signaling is used for activating at least one aperiodic CSI report; the at least one aperiodic CSI report is associated with at least one RS resource; and the at least one RS resource is associated with at least one of the plurality of objects.

35. The method according to claim 31, wherein the target signaling further comprises a third signaling; the third signaling carries indication information of the first object and at least one of indication information of the RS resource and indication information of a CSI report configuration; the indication information of the first object is used for indicating an index of the first object; the indication information of the RS resource is used for indicating at least one RS resource of the first object; and the indication information of the CSI report configuration is used for indicating at least one CSI report associated with the RS resource of the first object.

36. A channel state information (CSI) measurement and reporting apparatus, comprising:

   a receiving module, configured to: receive a target signaling sent by a network side device, and determine a reference signal (RS) resource of a first object based on the target signaling, wherein the target signaling is a signaling obtained before the terminal accesses the first object; and

   a measurement and reporting module, configured to execute CSI measurement and reporting based on the RS resource of the first object.

37. A channel state information (CSI) measurement and reporting apparatus, comprising:

   a sending module, configured to send a target signaling to a terminal, wherein the target signaling is a signaling sent before the terminal accesses a first object; and

   a receiving module, configured to receive a CSI report reported by the terminal, wherein the CSI report is obtained by measurement based on an RS resource of the first object, and the RS resource of the first object is determined based on the target signaling.

38. A terminal, comprising a processor and a memory, wherein the memory stores a program or an instruction runnable on the processor, and the program or instruction, when run by the processor, implement the steps of the channel state information (CSI) measurement and reporting method according to any one of claims 1 to 29.

39. A network side device, comprising a processor and a memory, wherein the memory stores a program or an instruction runnable on the processor; and the program or instruction, when run by the processor, implements the steps of the channel state information (CSI) measurement and reporting method according to any one of claims 30 to 35.

40. A readable storage medium, having a program or an instruction stored thereon, wherein the program or instruction, when run by the processor, implements the steps of the channel state information (CSI) measurement and reporting method according to any one of claims 1 to 29, or the steps of the channel state information (CSI) measurement and reporting method according to any one of claims 30 to 35.

Network
side device

Terminal

Terminal

FIG. 1

PDCCH
including DCI
that triggers an
A-CSI report

PUSCH transmitting
a CSI report

CSI-RS

CSI-IM

$Z_{ref}$

$Z'_{ref}$

Time length T'

Time length
of OFDM
symbol

Time length T

FIG. 2

A terminal receives a target signaling sent by a network side device, and determines a reference signal (RS) resource of a first object based on the target signaling, where the target signaling is a signaling obtained before the terminal accesses the first object                301

The terminal executes CSI measurement and reporting based on the RS resource of the first object                302

FIG. 3

```
┌──────────┐                                    ┌──────────────┐
│ Terminal │                                    │   Network    │
│          │                                    │ side device  │
└────┬─────┘                                    └──────┬───────┘
     │            501. Send a target signaling         │
     │◄───────────────────────────────────────────────│
     │                                                 │
┌────┴────────────────────────────────────────┐       │
│ 301. A terminal receives a target signaling  │       │
│   sent by a network side device, and         │       │
│   determines a reference signal (RS)         │       │
│   resource of a first object based on the    │       │
│   target signaling, where the target         │       │
│   signaling is a signaling obtained before   │       │
│   the terminal accesses the first object     │       │
└────┬─────────────────────────────────────────┘       │
     │                                                 │
┌────┴─────────────────────────────────────────┐       │
│ 302. The terminal executes CSI measurement    │       │
│   based on the RS resource of the first object│       │
└────┬─────────────────────────────────────────┘       │
     │            302. Report a CSI report            │
     │────────────────────────────────────────────────►│
     │                                                 │
```

# FIG. 4

```
┌──────────────────────────────────────────────────────────────┐
│ A network side device sends a target signaling to a terminal, │ ⌒ 501
│  where the target signaling is a signaling sent before the    │
│           terminal accesses a first object                    │
└───────────────────────────────┬──────────────────────────────┘
                                │
                                ▼
┌──────────────────────────────────────────────────────────────┐
│ The network side device receives a CSI report reported by the │
│  terminal, where the CSI report is obtained by measurement    │ ⌒ 502
│  based on an RS resource of the first object, and the RS       │
│  resource of the first object is determined based on the      │
│                    target signaling                           │
└──────────────────────────────────────────────────────────────┘
```

# FIG. 5

Channel state information measurement and reporting apparatus

701

Receiving module

702

Measurement and reporting module

**FIG. 6**

Channel state information measurement and reporting apparatus

801

Sending module

802

Receiving module

**FIG. 7**

200

Communication device

201

Processor

202

Memory

**FIG. 8**

FIG. 9

FIG. 10

## INTERNATIONAL SEARCH REPORT

| International application No. |
| --- |
| **PCT/CN2023/088571** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNKI, DWPI, EPTXTC, CNTXT, 3GPP: 小区, 切换, 目标, 接入, 参考信号, 资源, 配置, 对应, 指示, 确定, 测量, 上报, 报告, 下行, 调度, 提前, HO, handover, switch, reference signal, RS, CSI, resource, configuration, determination, measurement, indicat +, report, target, cell, TRP, early, advance, DL, schedul+, corresponding

**C. DOCUMENTS CONSIDERED TO BE RELEVANT**

| Category* | Citation of document, with indication, where appropriate, of the relevant passages | Relevant to claim No. |
| --- | --- | --- |
| X | CN 111526537 A (TELECOMMUNICATIONS TECHNOLOGY RESEARCH INSTITUTE CO., LTD.) 11 August 2020 (2020-08-11) description, paragraphs 340-430 | 1-16, 20, 22-40 |
| A | CN 111182578 A (TELECOMMUNICATIONS TECHNOLOGY RESEARCH INSTITUTE CO., LTD.) 19 May 2020 (2020-05-19) entire document | 1-40 |
| A | CN 113890715 A (MOBILE COMMUNICATION TECHNOLOGY CO. LTD.) 04 January 2022 (2022-01-04) entire document | 1-40 |
| A | VIVO. "Further Discussion on Multi Beam Enhancement" *3GPP TSG RAN WG1 #106-e. R1-2106571*, 07 August 2021 (2021-08-07), entire document | 1-40 |
| A | WO 2021227715 A1 (HUAWEI TECHNOLOGIES CO., LTD.) 18 November 2021 (2021-11-18) entire document | 1-40 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 July 2023** | **11 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | International application No.<br>**PCT/CN2023/088571** | |
|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 111526537 | A | 11 August 2020 | WO | 2020156155 | A1 | 06 August 2020 |
| | | | | EP | 3920580 | A1 | 08 December 2021 |
| | | | | US | 2022159523 | A1 | 19 May 2022 |
| CN | 111182578 | A | 19 May 2020 | None | | | |
| CN | 113890715 | A | 04 January 2022 | None | | | |
| WO | 2021227715 | A1 | 18 November 2021 | CN | 113676929 | A | 19 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210419340